# EUROPEAN PATENT APPLICATION

(11) **EP 4 583 597 A1**
(43) Date of publication of application: **09.07.2025**
(21) Application number: 22957017.1
(22) Date of filing: 02.09.2022
(51) Int. Cl.: H04W 64/00

(54) **TRANSMISSION AND RECEPTION POINT (TRP) INFORMATION DETERMINATION METHOD AND APPARATUS**

(71) Applicant: Beijing Xiaomi Mobile Software Co., Ltd., Beijing 100085 (CN)
(72) Inventor: LI, Yanhua, Beijing 100085 (CN)
(74) Representative: Gunzelmann, Rainer
(86) International application number: PCT/CN2022/116908
(87) International publication number: WO 2024/045198

(57) **Abstract**

Disclosed in embodiments of the present application are a transmission and reception point (TRP) information determination method and apparatus, applicable to the technical field of communications. The method comprises: a location management function (LMF) can determine TRP information of a mobile integrated access and backhaul (IAB) node, so as to determine, according to the TRP information of the IAB node, position information of a terminal device accessing the IAB node. Thus, the efficiency of location for the terminal device accessing the mobile IAB node is improved.

## Description

### FIELD

The present disclosure relates to the field of communication technologies, and in particular to a method and an apparatus for determining transmission and reception point (TRP) information.

### BACKGROUND

In a 3rd generation mobile communication technology (3G) network, a location management function (LMF) is an entity responsible for providing a location service. Before positioning, the LMF may obtain transmission and reception point (TRP) information from a base station to determine a location of a terminal device accessing the base station.

Currently, according to the requirements of 3GPP TS 22.261, the 5th generation mobile communication technology (5G) system can support the location service that the terminal device accesses the 5G system (5GS) through a mobile base station relay (i.e., IAB node). However, in a case where the mobile base station relay exists, a location of the IAB-node serving the terminal device may change (that is, a location of a TRP participating in positioning and information of a cell where the TRP is located may change), which will not only affect the positioning process of the LMF but also affect regular services that need the location of the terminal device.

### SUMMARY

Embodiments of the present disclosure provide a method and an apparatus for determining transmission and reception point (TRP) information. A location management function (LMF) can obtain TRP information of a mobile IAB-node, and then can determine location information of a terminal device accessing the IAB-node, so as to avoid the impact on a positioning process due to the change of a location of the IAB-node, and avoid the impact on regular services that need the location of the terminal device, thereby improving positioning efficiency.

In a first aspect, an embodiment of the present disclosure provides a method for determining transmission and reception point (TRP) information. The method is performed by a location management function (LMF). The method includes: determining the TRP information of a mobile integrated access and backhaul (IAB) node, where the TRP information is used to determine location information of a terminal device accessing the IAB node.

In the embodiment of the present disclosure, the location management function (LMF) can determine the TRP information of the mobile integrated access and backhaul (IAB) node, and can determine the location information of the terminal device accessing the IAB node based on the TRP information of the IAB node, thereby improving the positioning efficiency of the terminal device accessing the mobile IAB node.

In a second aspect, an embodiment of the present disclosure provides another method for determining transmission and reception point (TRP) information. The method is performed by a mobile integrated access and backhaul (IAB) node. The method includes: transmitting information used for determining the TRP information of the IAB node to a location management function (LMF), where the TRP information is used to determine location information of a terminal device accessing the IAB node.

In the embodiment of the present disclosure, the mobile integrated access and backhaul (IAB) node can transmit information used for determining the TRP information of the IAB node to the location management function (LMF), and can determine the location information of the terminal device accessing the IAB node based on the TRP information of the IAB node, thereby improving the positioning efficiency of the terminal device accessing the mobile IAB node.

In a third aspect, an embodiment of the present disclosure provides another method for determining transmission and reception point (TRP) information. The method is performed by a terminal device accessing a mobile integrated access and backhaul (IAB) node. The method includes: receiving the TRP information of the IAB node transmitted by a location management function (LMF); determining location information of the terminal device according to the TRP information and a first positioning measurement result of the terminal device; and transmitting the location information of the terminal device to the LMF.

In the embodiment of the present disclosure, a terminal device that accesses a mobile integrated access and backhaul (IAB) node can receive the TRP information of the IAB node transmitted by the location management function (LMF); can determine the location information of the terminal device according to the TRP information and the first positioning measurement result of the terminal device; and can transmit the location information of the terminal device to the LMF, thereby improving the positioning efficiency of the terminal device accessing the mobile IAB node.

In a fourth aspect, an embodiment of the present disclosure provides a communication device. The communication device has some or all of the functions implemented by the location management function (LMF) in the method described in the first aspect. For example, the communication device may have functions in some or all of the embodiments in the present disclosure; or may have functions independently implementing any of the embodiments of the present disclosure. The functions may be implemented by hardware, or may be implemented by hardware executing corresponding software. The hardware or software includes one or more units or modules corresponding to the above functions.

In an implementation, the structure of the communication device may include a transceiving unit and a processing unit, and the processing unit is configured to support the communication device in performing corresponding functions in the above method. The transceiving unit is configured to support communication between the communication device and another device. The communication device may further include a storage unit coupled to the transceiving unit and the processing unit. The storage unit is configured to store a computer program and data necessary for the communication device.

As an example, the processing unit may be a processor, the transceiving unit may be a transceiver or a communication interface, and the storage unit may be a memory.

In a fifth aspect, an embodiment of the present disclosure provides a communication device. The communication device has some or all of the functions implemented by the mobile integrated access and backhaul (IAB) node in the method described in the second aspect. For example, the communication device may have functions in some or all of the embodiments in the present disclosure; or may have functions independently implementing any of the embodiments of the present disclosure. The functions may be implemented by hardware, or may be implemented by hardware executing corresponding software. The hardware or software includes one or more units or modules corresponding to the above functions.

In an implementation, the structure of the communication device may include a transceiving unit and a processing unit, and the processing unit is configured to support the communication device in performing corresponding functions in the above method. The transceiving unit is configured to support communication between the communication device and another device. The communication device may further include a storage unit coupled to the transceiving unit and the processing unit. The storage unit is configured to store a computer program and data necessary for the communication device.

As an example, the processing unit may be a processor, the transceiving unit may be a transceiver or a communication interface, and the storage unit may be a memory.

In a sixth aspect, an embodiment of the present disclosure provides a communication device. The communication device has some or all of the functions implemented by the terminal device assessing the mobile integrated access and backhaul (IAB) node in the method described in the third aspect. For example, the communication device may have functions in some or all of the embodiments in the present disclosure; or may have functions independently implementing any of the embodiments of the present disclosure. The functions may be implemented by hardware, or may be implemented by hardware executing corresponding software. The hardware or software includes one or more units or modules corresponding to the above functions.

In an implementation, the structure of the communication device may include a transceiving unit and a processing unit, and the processing unit is configured to support the communication device in performing corresponding functions in the above method. The transceiving unit is configured to support communication between the communication device and another device. The communication device may further include a storage unit coupled to the transceiving unit and the processing unit. The storage unit is configured to store a computer program and data necessary for the communication device.

As an example, the processing unit may be a processor, the transceiving unit may be a transceiver or a communication interface, and the storage unit may be a memory.

In a seventh aspect, an embodiment of the present disclosure provides a communication device. The communication device includes a processor. When invoking a computer program in a memory, the processor executes the method described in the first aspect.

In an eighth aspect, an embodiment of the present disclosure provides a communication device. The communication device includes a processor. When invoking a computer program in a memory, the processor executes the method described in the second aspect.

In a ninth aspect, an embodiment of the present disclosure provides a communication device. The communication device includes a processor. When invoking a computer program in a memory, the processor executes the method described in the third aspect.

In a tenth aspect, an embodiment of the present disclosure provides a communication device. The communication device includes a processor and a memory for storing a computer program. The processor is configured to execute the computer program stored in the memory to cause the communication device to perform the method described in the above first aspect.

In an eleventh aspect, an embodiment of the present disclosure provides a communication device. The communication device includes a processor and a memory for storing a computer program. The processor is configured to execute the computer program stored in the memory to cause the communication device to perform the method described in the above second aspect.

In a twelfth aspect, an embodiment of the present disclosure provides a communication device. The communication device includes a processor and a memory for storing a computer program. The processor is configured to execute the computer program stored in the memory to cause the communication device to perform the method described in the above third aspect.

In a thirteenth aspect, an embodiment of the present disclosure provides a communication device. The device includes a processor and an interface circuit. The interface circuit is configured to receive code instructions and transmit them to the processor. The processor is configured to execute the code instructions to cause the device to execute the method described in the above first aspect.

In a fourteenth aspect, an embodiment of the present disclosure provides a communication device. The device includes a processor and an interface circuit. The interface circuit is configured to receive code instructions and transmit them to the processor. The processor is configured to execute the code instructions to cause the device to execute the method described in the above second aspect.

In a fifteenth aspect, an embodiment of the present disclosure provides a communication device. The device includes a processor and an interface circuit. The interface circuit is configured to receive code instructions and transmit them to the processor. The processor is configured to execute the code instructions to cause the device to execute the method described in the above third aspect.

In a sixteenth aspect, an embodiment of the present disclosure provides a communication system. The communication system includes the communication device according to the fourth aspect, the communication device according to the fifth aspect, and the communication device according to the sixth aspect; or the system includes the communication device according to the seventh aspect, the communication device according to the eighth aspect, and the communication device according to the ninth aspect; or the system includes the communication device according to the tenth aspect, the communication device according to the eleventh aspect, and the communication device according to the twelfth aspect; or the system includes the communication device according to the thirteenth aspect, the communication device according to the fourteenth aspect, and the communication device according to the fifteenth aspect.

In a seventeenth aspect, an embodiment of the present invention provides a computer-readable storage medium, configured to store instructions used by the terminal device. The instructions, when executed, cause the terminal device to execute the method described in the first aspect.

In an eighteenth aspect, an embodiment of the present invention provides a readable storage medium, configured to store instructions used by the network device. The instructions, when executed, cause the network device to execute the method described in the second aspect.

In a nineteenth aspect, an embodiment of the present invention provides a readable storage medium, configured to store instructions used by the network device. The instructions, when executed, cause the network device to execute the method described in the third aspect.

In a twentieth aspect, the present disclosure further provides a computer program product, including a computer program, which, when running on a computer, causes the computer to execute the method described in any one of the above first aspect.

In a twenty-first aspect, the present disclosure further provides a computer program product, including a computer program, which, when running on a computer, causes the computer to execute the method described in any one of the above second aspect.

In a twenty-second aspect, the present disclosure further provides a computer program product, including a computer program, which, when running on a computer, causes the computer to execute the method described in any one of the above third aspect.

In a twenty-third aspect, an embodiment of the present disclosure provides a communication system, including a location management function (LMF), a mobile integrated access and backhaul (IAB) node, and a terminal device that accesses the mobile integrated access and backhaul (IAB) node. The LMF performs the method described in the first aspect, the IAB node performs the method described in the second aspect, and the terminal device performs the method described in the third aspect.

In a twenty-fourth aspect, the present disclosure provides a chip system. The chip system includes at least one processor and an interface for supporting the first terminal device to implement the functions involved in the first aspect, for example, determining or processing at least one of data or information involved in the above method. In a possible design, the chip system further includes a memory, and the memory is configured to store necessary computer programs and data for the terminal device. The chip system may be composed of chips, or may include a chip and other discrete devices.

In a twenty-fifth aspect, the present disclosure provides a chip system. The chip system includes at least one processor and an interface for supporting the network device to implement the functions involved in the second aspect, for example, determining or processing at least one of data or information involved in the above method. In a possible design, the chip system further includes a memory, and the memory is configured to store necessary computer programs and data for the network device. The chip system may be composed of chips, or may include a chip and other discrete devices.

In a twenty-sixth aspect, the present disclosure provides a chip system. The chip system includes at least one processor and an interface for supporting the network device to implement the functions involved in the third aspect, for example, determining or processing at least one of data or information involved in the above method. In a possible design, the chip system further includes a memory, and the memory is configured to store necessary computer programs and data for the network device. The chip system may be composed of chips, or may include a chip and other discrete devices.

In a twenty-seventh aspect, the present disclosure provides a computer program that, when running on a computer, causes the computer to perform the method described in any one of the above first aspect.

In a twenty-eighth aspect, the present disclosure provides a computer program that, when running on a computer, causes the computer to perform the method described in any one of the above second aspect.

In a twenty-ninth aspect, the present disclosure provides a computer program that, when running on a computer, causes the computer to perform the method described in any one of the above third aspect.

### BRIEF DESCRIPTION OF THE DRAWINGS

In order to more clearly illustrate the technical solutions in the embodiments of the present disclosure or in the background technology, the drawings required to be used in the embodiments of the present disclosure or the background technology will be described below.
FIG. 1 is a schematic architectural diagram of a communication system provided by an embodiment of the present disclosure.
FIG. 2 is a schematic diagram of an IAB architecture.
FIG. 3 is a schematic flowchart of a method for determining transmission and reception point (TRP) information provided by an embodiment of the present disclosure.
FIG. 4 is a schematic flowchart of another method for determining transmission and reception point (TRP) information provided by an embodiment of the present disclosure.
FIG. 5 is a schematic flowchart of another method for determining transmission and reception point (TRP) information provided by an embodiment of the present disclosure.
FIG. 6 is a schematic flowchart of another method for determining transmission and reception point (TRP) information provided by an embodiment of the present disclosure.
FIG. 7 is a schematic flowchart of another method for determining T transmission and reception point (TRP) information provided by an embodiment of the present disclosure.
FIG. 8 is a schematic flowchart of another method for determining transmission and reception point (TRP) information provided by an embodiment of the present disclosure.
FIG. 9 is a schematic flowchart of another method for determining transmission and reception point (TRP) information provided by an embodiment of the present disclosure.
FIG. 10 is a schematic flowchart of another method for determining transmission and reception point (TRP) information provided by an embodiment of the present disclosure.
FIG. 11 is a schematic flowchart of another method for determining transmission and reception point (TRP) information provided by an embodiment of the present disclosure.
FIG. 12 is a schematic structural diagram of a communication device provided by an embodiment of the present disclosure.
FIG. 13 is a schematic structural diagram of another communication device provided by an embodiment of the present disclosure.
FIG. 14 is a schematic structural diagram of a chip provided by an embodiment of the present disclosure.

### DETAILED DESCRIPTION

In order to better understand the method for determining transmission and reception point (TRP) information disclosed in the embodiments of the present disclosure, the communication system to which the embodiments of the present disclosure are applicable will be first described below.

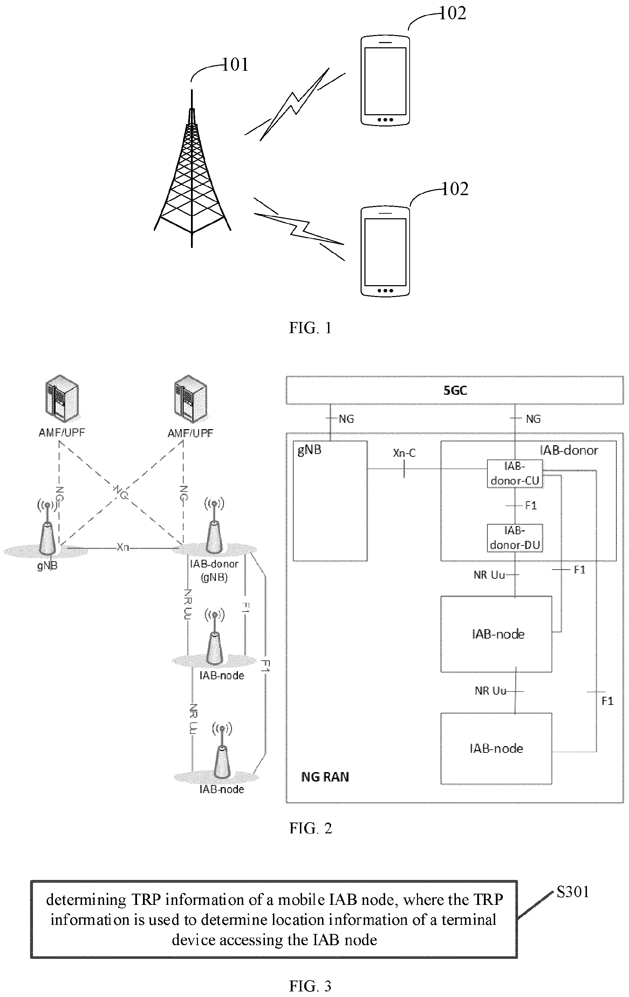

Referring to FIG. 1, FIG. 1 is a schematic architectural diagram of a communication system provided by an embodiment of the present disclosure. The communication system may include, but not limited to, one network device and one terminal device. The number and the form of devices shown in FIG. 1 are only for examples and do not constitute a limitation onto the embodiments of the present disclosure. In actual applications, the system may include two or more network devices and two or more terminal devices. The communication system shown in FIG. 1 includes one network device 101 and one terminal device 102, which is taken as an example.

It should be noted that technical solutions of the embodiments of the present disclosure may be applied to various communication systems, for example, a long term evolved (LTE) system, a 5th generation (5G) mobile communication system, a 5G new radio (NR) system, or other future updated mobile communication systems.

The network device 101 in the embodiments of the present disclosure is an entity on the network side for receiving or transmitting signals. For example, the network device 101 may be an evolved NodeB (eNB), a transmission reception point (TRP), a next generation NodeB (gNB) in an NR system, a base station in other future mobile communication systems, an access node in a wireless fidelity (WiFi) system, or the like. The specific technique and the specific device form used by the network device are not limited in the embodiments of the present disclosure. The network device provided by the embodiments of the present disclosure may include a centralized unit (CU) and a distributed unit (DU). The CU may also be referred to as a control unit. Protocol layers of the network device may be split by means of the structure of CU-DU, where functions of some protocol layers are arranged on the CU for centralized control, some or all of functions of the remaining protocol layers are distributed in the DU, and the CU centrally controls the DU.

The terminal device 102 in the embodiments of the present disclosure is an entity on the user side for receiving or transmitting signals, such as a mobile phone. The terminal device may also be referred to as terminal, user equipment (UE), mobile station (MS), mobile terminal (MT), etc. The terminal device may be a car with communication functions, a smart car, a mobile phone, a wearable device, a tablet computer (Pad), a computer with wireless transceiver functions, a virtual reality (VR) terminal, an augmented reality (AR) terminal, a wireless terminal in industrial control, a wireless terminal in self-driving, a wireless terminal in remote medical surgery, a wireless terminal in a smart grid, a wireless terminal in transportation safety, a wireless terminal in smart city, a wireless terminal in smart home, etc. The specific technique and the specific device form used by the terminal device are not limited in the embodiments of the present disclosure.

Integrated access and backhaul (IAB) supports millimeter wave base stations for radio access and backhaul, which may effectively reduce the need for updated optical fiber deployment when deploying a dense network, making radio relay of the 5G radio access network (i.e., Next Generation Radio Access Network, NG-RAN) becomes possible. A relay node is referred to as an IAB node (IAB-node) and supports radio access and backhaul through a new radio (NR) interface. A termination node of NR backhaul on the side of the network is referred to as an IAB-donor, which is a 5G base station (i.e., the next Generation Node B, gNB) that is additionally configured with an IAB function. The backhaul may be performed through a single hop or multiple hops, and the IAB architecture may be as shown in FIG. 2.

In FIG. 2, the NG-RAN supports the IAB function by making the IAB node (IAB-node) and the gNB (i.e., IAB-donor) capable of serving the IAB-node to be wirelessly connected. The IAB-donor includes one IAB-donor-CU and one or more IAB-donor-DU. In a case that gNB-CU-CP and gNB-CU-UP are separated, the IAB-donor may include one IAB-donor-CU-CP, multiple IAB-donor-CU-UPs and multiple IAB-donor-DUs. The IAB-node is accessing an upstream IAB-node or IAB-donor-DU through a terminal function subset of an NR Uu interface (i.e., IAB-MT function in the IAB-node). The IAB-node implements radio backhaul to a downstream IAB-node and a terminal device through a network function of the NR Uu interface (that is, the IAB-DU function of the IAB-node).

An F1-C service between the IAB-node and the IAB-donor-CU is backhauled through the IAB-donor-DU and an IAB-node in an optional intermediate hop. An F1-U service between the IAB-node and the IAB-donor-CU is backhauled through the IAB-donor-DU and an IAB-node in an optional intermediate hop.

In the 3rd generation mobile communication technology (3G) network, a location management function (LMF) is an entity responsible for providing location services. A terminal device entering a connected state can communicate with the LMF through the LTE positioning protocol (LPP), and a base station and the LMF can communicate with each other through the NR positioning protocol A (NRPPa). Before positioning, the LMF may obtain transmission and reception point (TRP) information from the base station to determine a location of a terminal device accessing the base station.

The calculating the location of the terminal device may be divided into two situations: LMF-based positioning and UE-based positioning. The LMF-based positioning means that the LMF may request the terminal device to perform positioning measurement and collect a positioning measurement result of the terminal device; at the same time, the LMF may request the base station to perform positioning measurement through the NRPPa protocol and collect a positioning measurement result of the base station; and the LMF may calculate a location of the terminal device according to the TRP information, the measurement result of the terminal device and/or the measurement result of the base station. The UE-based positioning means that after obtaining the TRP information from the base station, the LMF transmits the TRP information and a measurement request to the terminal device, and the terminal device performs positioning measurement to obtain a positioning measurement result of the terminal device, calculates its own location according to its own positioning measurement result and/or the TRP information, and reports its own location to the LMF.

Currently, according to the requirements of 3GPP TS 22.261, the 5th generation mobile communication technology (5G) system can support a location service that the terminal device accesses the 5G system (5GS) through a mobile base station relay (i.e., IAB node). However, in a case that the mobile base station relay exists, a location of the IAB-node serving the terminal device may change (that is, a location of a TRP participating in positioning and information of a cell where the TRP is located may change), which will not only affect the positioning process of the LMF but also affect regular services that need the location of the terminal device.

It may be appreciated that the communication system described in the embodiments of the present disclosure is to more clearly illustrate the technical solutions of the embodiments of the present disclosure, and does not constitute a limitation onto the technical solutions provided by the embodiments of the present disclosure. As those of ordinary skill in the art will know, with the evolution of the system architecture and the emergence of updated service scenarios, the technical solutions provided by the embodiments of the present disclosure are also applicable to similar technical problems.

It should be noted that the method for determining transmission and reception point (TRP) information provided in any embodiment of the present disclosure can be executed alone, or in combination with a possible implementation in other embodiments, or in combination with any technical solution in related technologies.

The method and the apparatus for determining transmission and reception point (TRP) information provided by the present disclosure will be introduced in detail below with reference to the accompanying drawings.

Referring to FIG. 3, FIG. 3 is a schematic flowchart of a method for determining transmission and reception point (TRP) information provided by an embodiment of the present disclosure. The method for determining the transmission and reception point (TRP) information is performed by a location management function (LMF). As shown in FIG. 3, the method may include, but not limited to, the following steps.

In step S301, the TRP information of a mobile integrated access and backhaul (IAB) node is determined, where the TRP information is used to determine location information of a terminal device accessing the IAB node.

In an embodiment of the present disclosure, the TRP information of the IAB node may include location information of the IAB node. In addition, the TRP information of the IAB node may also include at least one of the following items: a mobile IAB indication, an identification of the IAB node, an identification of an IAB mobile termination (IAB-MT) function in the IAB node, a previous physical cell identity (PCI) of the IAB node, a previous cell global identity (CGI) of the IAB node, an updated physical cell identity (PCI) of the IAB node, an updated cell global identity (CGI) of the IAB node, or a validity duration of the TRP information. The mobile IAB indication is used to indicate that the IAB node is a mobile IAB node.

At least one item of the above TRP information can uniquely identify the IAB node. That is to say, the IAB node can be uniquely determined based on at least one item of the above TRP information, that is, to determine the IAB node which the terminal device accesses. The location information of the IAB node is further determined; and the location information of the terminal device is determined based on a combination of the location information of the IAB node, a positioning measurement result of the IAB node and/or a positioning measurement result of the terminal device assessing the IAB node.

In the embodiments of the present disclosure, in an implementation, on the basis of step S301, the LMF may further perform the following process: determining the location information of the terminal device according to the TRP information, a first positioning measurement result of the terminal device and/or a second positioning measurement result of the mobile IAB node.

Specifically, the LMF may calculate or obtain the location information of the terminal device according to the TRP information, the first positioning measurement result of the terminal device, and/or the second positioning measurement result of the IAB node.

The first positioning measurement result of the terminal device is a measurement result obtained by the terminal device measuring a reference signal transmitted by the IAB node. The second positioning measurement result of the IAB node is a measurement result obtained by the IAB node measuring a reference signal transmitted by the terminal device.

The LMF may transmit first positioning request information to the terminal device, where the first positioning request information is used to request the terminal device to perform positioning measurement according to the reference signal of the IAB node to obtain the first positioning measurement result. The LMF may receive the first positioning measurement result transmitted by the terminal device.

The LMF may transmit second positioning request information to the IAB node, where the second positioning request information is used to request the IAB node to perform positioning measurement according to the reference signal of the terminal device to obtain the second positioning measurement result. The LMF may receive the second positioning measurement result transmitted by the IAB node.

In an example, the LMF may determine the location information of the terminal device based on the TRP information of the IAB node and the second positioning measurement result of the IAB node. In another example, the LMF may determine the location information of the terminal device based on the TRP information of the IAB node and the first positioning measurement result of the terminal device accessing the IAB node. In another example, the LMF may determine the location information of the terminal device based on the TRP information of the IAB node, the second positioning measurement result of the IAB node, and the first positioning measurement result of the terminal device accessing the IAB node.

In the embodiments of the present disclosure, in another implementation, on the basis of step S301, the LMF may further perform the following processes: transmitting third positioning request information and the TRP information to the terminal device, to request the terminal device to perform positioning measurement to obtain a third positioning measurement result, and determine the location information of the terminal device based on the third positioning measurement result and the TRP information; and receiving the location information transmitted by the terminal device.

Specifically, the terminal device may calculate or obtain the location information of the terminal device according to the third positioning measurement result and the TRP information.

In the TRP information transmitted by the LMF to the terminal device, the location information of the IAB node may include trajectory information of the IAB node. The trajectory information of the IAB node includes at least one of: current trajectory information of the IAB node, historical trajectory information of the IAB node, or predicted trajectory information of the IAB node. The current trajectory information is trajectory information of the IAB node in a current time period. The historical trajectory information is trajectory information of the IAB node in a historical time period. The predicted trajectory information is trajectory information of the IAB node in a future time period.

In the embodiments of the present disclosure, the mobile IAB node may be in a moving state or a stationary state. In an example, the LMF may periodically determine the TRP information of the IAB node. In another example, the LMF may determine the TRP information of the IAB node when positioning needs to be performed on the terminal device accessing the IAB node. In another example, the LMF may determine the TRP information of the IAB node when a location of the IAB node changes.

In the method for determining transmission and reception point (TRP) information provided by the embodiments of the present disclosure, the location management function (LMF) can determine the TRP information of the mobile integrated access and backhaul (IAB) node, and then can determine the location information of the terminal device accessing the IAB node according to the TRP information of the IAB node, so as to improve the positioning efficiency of the terminal device accessing the mobile IAB node.

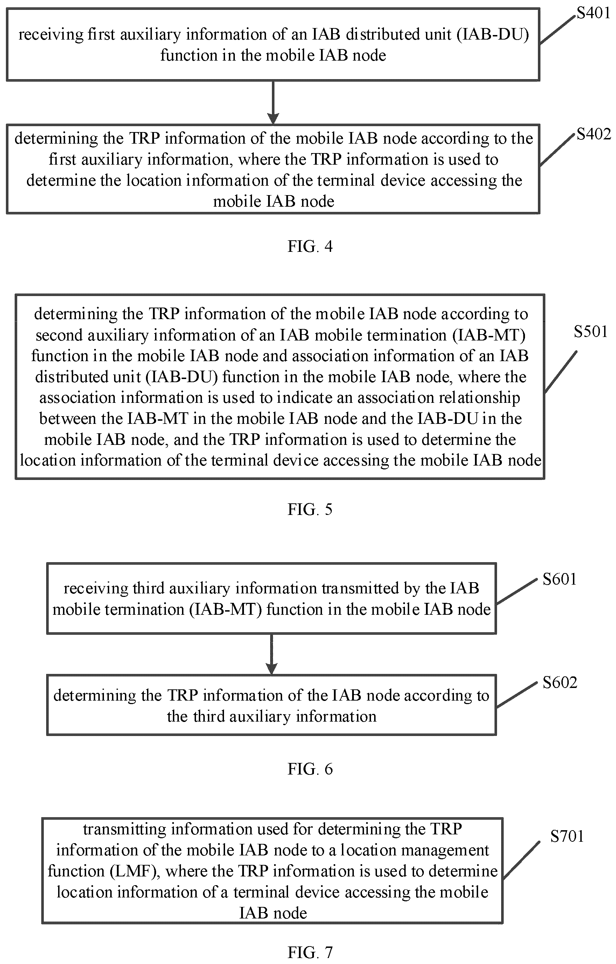

Referring to FIG. 4, FIG. 4 is a schematic flowchart of another method for determining transmission and reception point (TRP) information provided by an embodiment of the present disclosure, which is performed by a location management function (LMF). As shown in FIG. 4, the method may include, but not limited to, the following steps.

In step S401, first auxiliary information of an IAB distributed unit (IAB-DU) function in the mobile integrated access and backhaul (IAB) node is received.

In the embodiment of the present disclosure, the process of the LMF performing step S401 may be, for example, receiving the first auxiliary information transmitted by the IAB-donor. The first auxiliary information is transmitted to the IAB-donor by the IAB-DU in the IAB node.

The LMF may receive an NRPPa message transmitted by the IAB-donor, and the NRPPa message includes the first auxiliary information. The NRPPa message may be at least one of the following messages: a TRP information response message, a TRP information update message, and other NRPPa messages except the TRP information response message and the TRP information update message.

The IAB-donor may receive an F1AP message transmitted by the IAB-DU in the IAB node, and the F1AP message includes the first auxiliary information. The F1AP message may be at least one of the following messages: a TRP information response message, a TRP information update message, and other F1AP messages except the TRP information response message and the TRP information update message.

In the embodiment of the present disclosure, the mobile IAB node may be in a moving state or a stationary state. In an example, the LMF may periodically transmit a TRP information request to the IAB node, so as to receive the first auxiliary information of the IAB-DU in the IAB node. In another example, the LMF may transmit a TRP information request to the IAB node, so as to receive the first auxiliary information of the IAB-DU in the IAB node when the terminal device accessing the IAB node needs to be located. In another example, the LMF may receive the first auxiliary information transmitted by the IAB-DU in the IAB node when a location of the IAB node changes.

In step S402, the TRP information of the IAB node is determined according to the first auxiliary information, where the TRP information is used to determine the location information of the terminal device accessing the IAB node.

In an embodiment of the present disclosure, the first auxiliary information includes at least one TRP information, and the TRP information includes at least one of: a mobile IAB indication, an identification of the IAB node, an identification of an IAB mobile termination (IAB-MT) function in the IAB node, a previous physical cell identity (PCI) of the IAB node, a previous cell global identity (CGI) of the IAB node, an updated physical cell identity (PCI) of the IAB node, an updated cell global identity (CGI) of the IAB node, location information of the IAB node, or a validity duration of the TRP information, where the mobile IAB indication is used to indicate that the IAB node is a mobile node.

Optionally, the TRP information included in the first auxiliary information may be used to indicate TRP information of one or more TRP items in a TRP list. In an embodiment, the number of TRP information in the first auxiliary information may be multiple, and each TRP information may correspond to one TRP item, and is used to indicate TRP information of the one TRP item in the TRP list; TRP information is included in each TRP item in the TRP list, and is used to indicate TRP information corresponding to a specific TRP. In another embodiment, the TRP information included in the first auxiliary information is used as separate information, and the number of TRP information may be single, and is used to indicate TRP information of all TRP items in the TRP list; that is, all the TRP items in the TRP list may use the same TRP information. The validity duration of the TRP information means that after the validity duration expires, the LMF needs to re-determine the TRP information, to re-request the TRP information, and/or to consider the current TRP information to be unavailable.

It should be noted that the location information of the IAB node may include trajectory information of the IAB node. The trajectory information of the IAB node includes at least one of: current trajectory information of the IAB node, historical trajectory information of the IAB node, or predicted trajectory information of the IAB node. The current trajectory information is trajectory information of the IAB node in a current time period. The historical trajectory information is trajectory information of the IAB node in a historical time period, and may be used to predict the trajectory information of the IAB node in a future time period. The predicted trajectory information is the trajectory information of the IAB node in the future time period.

In an embodiment of the present disclosure, the TRP information of the IAB node may include location information of the IAB node. In addition, the TRP information of the IAB node may also include at least one of the following items: a mobile IAB indication, an identification of the IAB node, an identification of an IAB mobile termination (IAB-MT) function in the IAB node, a previous physical cell identity (PCI) of the IAB node, a previous cell global identity (CGI) of the IAB node, an updated physical cell identity (PCI) of the IAB node, an updated cell global identity (CGI) of the IAB node, or a validity duration of the TRP information. The mobile IAB indication is used to indicate that the IAB node is a mobile IAB node.

At least one item of the above TRP information can uniquely identify the IAB node. That is to say, the IAB node can be uniquely determined based on at least one item of the above TRP information, that is, to determine the IAB node which the terminal device accesses. The location information of the IAB node is further determined; and the location information of the terminal device is determined based on the location information of the IAB node, a positioning measurement result of the IAB node and/or a positioning measurement result of the terminal device assessing the IAB node.

In the embodiments of the present disclosure, in an implementation, on the basis of steps S401 and S402, the LMF may further perform the following process: determining the location information of the terminal device according to the TRP information, a first positioning measurement result of the terminal device and/or a second positioning measurement result of the mobile IAB node.

Specifically, the LMF may calculate or obtain the location information of the terminal device according to the TRP information, the first positioning measurement result of the terminal device, and/or the second positioning measurement result of the IAB node.

The first positioning measurement result of the terminal device is a measurement result obtained by the terminal device measuring a reference signal transmitted by the IAB node. The second positioning measurement result of the IAB node is a measurement result obtained by the IAB node measuring a reference signal transmitted by the terminal device.

In an example, the LMF may determine the location information of the terminal device based on the TRP information of the IAB node and the second positioning measurement result of the IAB node. In another example, the LMF may determine the location information of the terminal device based on the TRP information of the IAB node and the first positioning measurement result of the terminal device accessing the IAB node. In another example, the LMF may determine the location information of the terminal device based on the TRP information of the IAB node, the second positioning measurement result of the IAB node, and the first positioning measurement result of the terminal device accessing the IAB node.

In the embodiment of the present disclosure, in another implementation, on the basis of steps S401 and S402, the LMF may further perform the following processes: transmitting third positioning request information and the TRP information to the terminal device, to request the terminal device to perform positioning measurement to obtain a third positioning measurement result, and determine the location information of the terminal device based on the third positioning measurement result and the TRP information; and receiving the location information transmitted by the terminal device.

Specifically, the terminal device may calculate or obtain the location information of the terminal device according to the third positioning measurement result and the TRP information.

In the TRP information transmitted by the LMF to the terminal device, the location information of the IAB node may include the trajectory information of the IAB node. The trajectory information of the IAB node includes at least one of: current trajectory information of the IAB node, historical trajectory information of the IAB node, or predicted trajectory information of the IAB node. The current trajectory information is trajectory information of the IAB node in a current time period. The historical trajectory information is trajectory information of the IAB node in a historical time period, and may be used to predict the trajectory information of the IAB node in a future time period. The predicted trajectory information is the trajectory information of the IAB node in the future time period.

The following example is provided for illustration. Based on the embodiment shown in FIG. 4, an interaction process among the IAB node, the IAB-donor and the LMF may be as shown in the following process. (1) The IAB-DU in the IAB node determines to transmit the first auxiliary information to the IAB-donor. The IAB node transmits the first auxiliary information to the IAB-donor based on the following two situations: in a first situation, the IAB-DU in the IAB node receives a TRP information request from the IAB-donor; in a second situation, a location of the IAB node changes, causing the TRP information of the IAB node to change. The change of the TRP information is caused by movement of the IAB node. The change of the TRP information includes, but is not limited to, at least one of: a change in location information of the TRP, a change in historical movement trajectory information of the TRP, a change in predicted movement trajectory information of the TRP, PCI update, CGI update, or an update of positioning reference signal configuration. (2) The IAB-donor receives the first auxiliary information and transmits the first auxiliary information to the LMF via an NRPPa message. (3) The LMF receives the first auxiliary information and locates the terminal device accessing the IAB node based on the first auxiliary information. In this way, the LMF may obtain accurate TRP information of the IAB-node, thereby providing a positioning service for the terminal device via the IAB node, and improving the positioning accuracy.

In the method for determining transmission and reception point (TRP) information provided by the embodiments of the present disclosure, the location management function (LMF) can determine to receive the first auxiliary information of the IAB distributed unit (IAB-DU) function in the mobile integrated access and backhaul (IAB) node; the TRP information of the IAB node is determined according to the first auxiliary information, where the TRP information is used to determine the location information of the terminal device accessing the IAB node, and then the location information of the terminal device accessing the IAB node is determined based on the TRP information of the IAB node, so as to improve positioning efficiency of the terminal device accessing the mobile IAB node.

Referring to FIG. 5, FIG. 5 is a schematic flowchart of another method for determining transmission and reception point (TRP) information provided by an embodiment of the present disclosure. The method for determining the transmission and reception point (TRP) information is performed by a location management function (LMF). As shown in FIG. 5, the method may include, but not limited to, the following steps.

In step S501, the TRP information of the mobile integrated access and backhaul (IAB) node is determined according to second auxiliary information of an IAB mobile termination (IAB-MT) function in the IAB node and association information of an IAB distributed unit (IAB-DU) function in the IAB node, where the association information is used to indicate an association relationship between the IAB-MT in the mobile IAB node and the IAB-DU in the mobile IAB node, and the TRP information is used to determine the location information of the terminal device accessing the IAB node.

It should be understood that the LMF may receive the association information and the second auxiliary information simultaneously, or may receive the association information and the second auxiliary information separately. In addition, the second auxiliary information and the association information may be transmitted through a same message or through different messages, which is not limited by the disclosure.

In the embodiments of the present disclosure, in an implementation, before step S501, the LMF may further perform the following process: receiving the second auxiliary information transmitted by the IAB-MT in the IAB node. In this implementation, the LMF may receive the association information in another method, or the association information may be pre-configured.

The LMF may receive an LTE positioning protocol (LPP) message transmitted by the IAB-MT in the IAB node, and the LPP message includes the second auxiliary information. The LPP message may be at least one of the following messages: a Provide Capabilities message, a Provide Location Information message, and other LPP messages except the Provide Capabilities message and the Provide Location Information message.

The mobile IAB node may be in a moving state or a static state. In an example, the LMF may periodically receive the second auxiliary information. In another example, the LMF may receive the second auxiliary information when it is necessary to locate the terminal device accessing the IAB node. In another example, the LMF may receive the second auxiliary information transmitted by the IAB-MT in the IAB node when a location of the IAB node changes.

In another implementation, before step S501, the LMF may further perform the following process: receiving the association information transmitted by the IAB-DU in the IAB node. In this implementation, the LMF may receive the second auxiliary information in another method, or the second auxiliary information may be pre-configured.

The mobile IAB node may be in a moving state or a static state. In an example, the LMF may receive association information periodically. In another example, the LMF may receive the association information when it is necessary to locate the terminal device accessing the IAB node. In another example, the LMF may receive the second auxiliary information transmitted by the IAB-DU in the IAB node when the location of the IAB node changes.

For example, the process of the LMF receiving the association information transmitted by the IAB-DU in the IAB node may include receiving the association information transmitted by the IAB-donor, and the association information is transmitted by the IAB-DU in the IAB node to the IAB-donor.

The LMF may receive an NRPPa message transmitted by IAB-donor, and the NRPPa message includes the association information. The NRPPa message may be at least one of the following messages: a TRP information response message, a TRP information update message, and other NRPPa messages except the TRP information response message and the TRP information update message.

The IAB-donor may receive an F1AP message transmitted by the IAB-DU in the IAB node, and the F1AP message includes the association information. The F1AP message may be at least one of the following messages: a TRP information response message, a TRP information update message, and other F1AP messages except the TRP information response message and the TRP information update message.

In an embodiment of the present disclosure, the second auxiliary information may include at least one of: a mobile IAB indication, an identification of the IAB node, indication information of the IAB node, or information of a relative position between the IAB-DU and the IAB-MT, where the indication information of the IAB node is used to indicate that the IAB node includes both the IAB-MT and the IAB-DU, and the mobile IAB indication is used to indicate that the IAB node is a mobile node.

The IAB node indication information is used to indicate that the IAB node includes both the IAB-MT and the IAB-DU, that is, to indicate that a node has both an IAB-MT function and an IAB-DU function.

In the embodiment of the present disclosure, the association information is used to indicate an association relationship between the IAB-MT in the IAB node and the IAB-DU in the IAB node. That is to say, it indicates that the IAB-MT and the IAB-DU are located in the same IAB node, the IAB-MT and the IAB-DU may have the same location information in real time, or the IAB-MT and the IAB-DU may have fixed relative location information in real time.

In the embodiment of the present disclosure, the LMF may determine an identity of the IAB-MT based on the second auxiliary information, may determine the IAB-DU that has the association relationship with the IAB-MT according to the association relationship, and then may determine TRP information of the IAB node that includes the IAB-MT and the IAB-DU.

In the embodiment of the present disclosure, in an implementation, on the basis of step S501, the LMF may further perform the following process: determining the location information of the terminal device according to the TRP information, a first positioning measurement result of the terminal device and/or a second positioning measurement result of the mobile IAB node.

Specifically, the LMF may calculate or obtain the location information of the terminal device based on the TRP information, the first positioning measurement result of the terminal device, and/or the second positioning measurement result of the IAB node.

The first positioning measurement result of the terminal device is a measurement result obtained by the terminal device measuring a reference signal transmitted by the IAB node. The second positioning measurement result of the IAB node is a measurement result obtained by the IAB node measuring a reference signal transmitted by the terminal device.

In an example, the LMF may determine the location information of the terminal device based on the TRP information of the IAB node and the second positioning measurement result of the IAB node. In another example, the LMF may determine the location information of the terminal device based on the TRP information of the IAB node and the first positioning measurement result of the terminal device accessing the IAB node. In another example, the LMF may determine the location information of the terminal device based on the TRP information of the IAB node, the second positioning measurement result of the IAB node, and the first positioning measurement result of the terminal device accessing the IAB node.

In the embodiments of the present disclosure, in another implementation, on the basis of step S501, the LMF may further perform the following process: transmitting third positioning request information and the TRP information to the terminal device, to request the terminal device to perform positioning measurement to obtain a third positioning measurement result, and determine the location information of the terminal device based on the third positioning measurement result and the TRP information; and receiving the location information transmitted by the terminal device.

Specifically, the terminal device may calculate or obtain the location information of the terminal device according to the third positioning measurement result and the TRP information.

In the TRP information transmitted by the LMF to the terminal device, the location information of the IAB node may include trajectory information of the IAB node. The trajectory information of the IAB node includes at least one of: current trajectory information of the IAB node, historical trajectory information of the IAB node, or predicted trajectory information of the IAB node. The current trajectory information is trajectory information of the IAB node in a current time period. The historical trajectory information is trajectory information of the IAB node in a historical time period. The predicted trajectory information is trajectory information of the IAB node in a future time period.

The following example is provided for illustration. Based on the embodiment shown in FIG. 5, an interaction process among the IAB node, the IAB-donor and the LMF may be as shown in the following process. (1) The IAB-MT in the IAB node transmits an LPP message to the LMF, and the LPP message includes second auxiliary information. (2) The LMF receives and saves the second auxiliary information. (3) If the LMF needs to initiate a positioning process to the terminal device under the IAB-DU in the IAB node, the LMF may transmit a positioning information request message to the IAB-donor. (4) The IAB-DU in the IAB node transmits a positioning information response message to the IAB-donor. The positioning information response message may include the association information between the IAB-DU and the IAB-MT, such as IAB-node ID, PCI, CGI and/or ID information of the IAB-MT, etc. (5) The IAB-donor transmits a positioning information response message to the LMF. The positioning information message may include the association information of the IAB-DU and the IAB-MT. (6) The LMF may obtain the TRP information of the IAB-DU in the IAB node accessed by the terminal device based on the association information and the second auxiliary information, thereby positioning the terminal device.

In the method for determining transmission and reception point (TRP) information provided by the embodiments of the present disclosure, the location management function (LMF) can determine the TRP information of the mobile integrated access and backhaul (IAB) node according to the second auxiliary information of the IAB mobile termination (IAB-MT) function in the IAB node and the association information of the IAB distributed unit (IAB-DU) function in the IAB node, where the association information is used to indicate the association relationship between the IAB-MT in the mobile IAB node and the IAB-DU in the mobile IAB node, and the TRP information is used to determine the location information of the terminal device accessing the IAB node. Thus, the location information of the terminal device accessing the IAB node is determined based on the TRP information of the IAB node, thereby improving the positioning efficiency of the terminal device accessing the mobile IAB node.

Referring to FIG. 6, FIG. 6 is a schematic flowchart of another method for determining transmission and reception point (TRP) information provided by an embodiment of the present disclosure. The method for determining the transmission and reception point (TRP) information is performed by a location management function (LMF). As shown in FIG. 6, the method may include, but not limited to, the following steps.

In step S601, third auxiliary information transmitted by the IAB mobile termination (IAB-MT) function in the mobile integrated access and backhaul (IAB) node is received.

In the embodiment of the present disclosure, the LMF may receive an LTE positioning protocol (LPP) message transmitted by the IAB-MT in the IAB node, and the LPP message includes the third auxiliary information. The LPP message may be at least one of the following messages: a Provide Capabilities message, a Provide Location Information message, and other LPP messages except the Provide Capabilities message and the Provide Location Information message.

The mobile IAB node may be in a moving state or a static state. In an example, the LMF may periodically receive the third auxiliary information. In another example, the LMF may receive the third auxiliary information when it is necessary to locate the terminal device accessing the IAB node. In another example, the LMF may receive the third auxiliary information transmitted by the IAB-MT in the IAB node when a location of the IAB node changes.

In step S602, the TRP information of the IAB node is determined according to the third auxiliary information.

In the embodiment of the present disclosure, the third auxiliary information includes at least one of: a mobile IAB indication, an identification of the IAB node, indication information of the mobile IAB node, or a TRP list supportable by the mobile IAB node, where the indication information of the mobile IAB node is used to indicate that the mobile IAB node includes both the IAB-MT and the IAB-DU, and the mobile IAB indication is used to indicate that the mobile IAB node is a mobile node.

The IAB node indication information is used to indicate that the IAB node includes both the IAB-MT and the IAB-DU, that is, to indicate that a node has both an IAB-MT function and an IAB-DU function.

One TRP list may include one or more TRP items, and each TRP item includes at least one of: PCI, CGI, frequency point information, information of a positioning reference signal, or trajectory information of the IAB node.

In another example, the LMF may obtain, based on the identification of the IAB node, at least one of the following items of the IAB node: an identity of an IAB mobile termination (IAB-MT) function in the IAB node, a previous physical cell identity (PCI) of the IAB node, a previous cell global identity (CGI) of the IAB node, an updated physical cell identity (PCI) of the IAB node, an updated cell global identity (CGI) of the IAB node, and a reference signal of the IAB node; then the LMF may determine the IAB TRP information of the node.

In the embodiment of the present disclosure, in an implementation, on the basis of steps S601 and S602, the LMF may further perform the following process: determining the location information of the terminal device according to the TRP information, a first positioning measurement result of the terminal device and/or a second positioning measurement result of the mobile IAB node.

Specifically, the LMF may calculate or obtain the location information of the terminal device according to the TRP information, the first positioning measurement result of the terminal device, and/or the second positioning measurement result of the IAB node.

The first positioning measurement result of the terminal device is a measurement result obtained by the terminal device measuring a reference signal transmitted by the IAB node. The second positioning measurement result of the IAB node is a measurement result obtained by the IAB node measuring a reference signal transmitted by the terminal device.

In an example, the LMF may determine the location information of the terminal device based on the TRP information of the IAB node and the second positioning measurement result of the IAB node. In another example, the LMF may determine the location information of the terminal device based on the TRP information of the IAB node and the first positioning measurement result of the terminal device accessing the IAB node. In another example, the LMF may determine the location information of the terminal device based on the TRP information of the IAB node, the second positioning measurement result of the IAB node, and the first positioning measurement result of the terminal device accessing the IAB node.

In the embodiment of the present disclosure, in another implementation, on the basis of steps S601 to S602, the LMF may further perform the following processes: transmitting third positioning request information and the TRP information to the terminal device, to request the terminal device to perform positioning measurement to obtain a third positioning measurement result, and determine the location information of the terminal device based on the third positioning measurement result and the TRP information; and receiving the location information transmitted by the terminal device.

Specifically, the terminal device may calculate or obtain the location information of the terminal device according to the third positioning measurement result and the TRP information.

In the TRP information transmitted by the LMF to the terminal device, the location information of the IAB node may include the trajectory information of the IAB node. The trajectory information of the IAB node includes at least one of: current trajectory information of the IAB node, historical trajectory information of the IAB node, or predicted trajectory information of the IAB node. The current trajectory information is trajectory information of the IAB node in a current time period. The historical trajectory information is trajectory information of the IAB node in a historical time period, and may be used to predict the trajectory information of the IAB node in a future time period. The predicted trajectory information is the trajectory information of the IAB node in the future time period.

The following example is provided for illustration. Based on the embodiment shown in FIG. 6, an interaction process among the IAB node, the IAB-donor and the LMF may be as shown in the following process. (1) The IAB-MT in the IAB node transmits an LPP message to the LMF, and the LPP message includes the third auxiliary information. (2) The LMF receives the third auxiliary information. (3) If a terminal device accesses a network through a cell provided in the above IAB node, and LMF needs to locate the terminal device, the LMF transmits an LPP message to the terminal device, that is, a request message for the location information; the LPP message may include the TRP information. The TRP information may include, for example, a list of TRP information required for positioning. Optionally, the list of the TRP information may also include trajectory information of the IAB node. (3) The terminal device may determine its own location based on the TRP information. (4) In response to the request message for the location information, the terminal device may transmit a Provide Location Information message to the LMF, which includes its own location.

In the method for determining transmission and reception point (TRP) information provided by the embodiments of the present disclosure, the location management function (LMF) can receive the third auxiliary information transmitted by the IAB mobile termination (IAB-MT) function in the mobile integrated access and backhaul (IAB) node; the TRP information of the IAB node is determined according to the third auxiliary information; and the location information of the terminal device accessing the IAB node is determined according to the TRP information of the IAB node, thereby improving the positioning efficiency of the terminal device accessing the mobile IAB node.

Referring to FIG. 7, FIG. 7 is a schematic flowchart of another method for determining transmission and reception point (TRP) information provided by an embodiment of the present disclosure. The method for determining the transmission and reception point (TRP) information is performed by a mobile integrated access and backhaul (IAB) node. As shown in FIG. 7, the method may include, but not limited to, the following steps.

In step S701, information used for determining the TRP information of the IAB node is transmitted to a location management function (LMF), where the TRP information is used to determine location information of a terminal device accessing the mobile IAB node.

In an embodiment of the present disclosure, the TRP information of the IAB node may include location information of the IAB node. In addition, the TRP information of the IAB node may also include at least one of the following items: a mobile IAB indication, an identification of the IAB node, an identification of an IAB mobile termination (IAB-MT) function in the IAB node, a previous physical cell identity (PCI) of the IAB node, a previous cell global identity (CGI) of the IAB node, an updated physical cell identity (PCI) of the IAB node, an updated cell global identity (CGI) of the IAB node, or a validity duration of the TRP information. The mobile IAB indication is used to indicate that the IAB node is a mobile IAB node.

At least one item of the above TRP information can uniquely identify the IAB node. That is to say, the IAB node can be uniquely determined based on at least one item of the above TRP information, that is, to determine the IAB node which the terminal device accesses. The location information of the IAB node is further determined; and the location information of the terminal device is determined based on a combination of the location information of the IAB node, a positioning measurement result of the IAB node and/or a positioning measurement result of the terminal device assessing the IAB node.

In the embodiments of the present disclosure, on the basis of step S701, the mobile IAB node may further perform the following processes: receiving second positioning request information from the LMF, where the second positioning request information is used to request the IAB node to perform positioning measurement according to a reference signal of the terminal device to obtain a second positioning measurement result; and transmitting the second positioning measurement result to the LMF, to instruct the LMF to determine the location information of the terminal device based on the second positioning measurement result and the TRP information.

Specifically, the LMF may calculate or obtain the location information of the terminal device based on the TRP information and the second positioning measurement result.

In the embodiments of the present disclosure, the location information of the IAB node in the TRP information may include trajectory information of the IAB node. The trajectory information of the IAB node includes at least one of: current trajectory information of the IAB node, historical trajectory information of the IAB node, or predicted trajectory information of the IAB node. The current trajectory information is trajectory information of the IAB node in a current time period. The historical trajectory information is trajectory information of the IAB node in a historical time period, and may be used to predict the trajectory information of the IAB node in a future time period. The predicted trajectory information is the trajectory information of the IAB node in the future time period.

In the embodiment of the present disclosure, the mobile IAB node may be in a moving state or a stationary state. In an example, the mobile IAB node may periodically transmit the information used for determining the TRP information to the LMF. In another example, the IAB node may transmit the information used for determining the TRP information to the LMF according to a request from the LMF. In another example, the IAB node may transmit the information used for determining the TRP information to the LMF when a location of the IAB node changes.

In the method for determining transmission and reception point (TRP) information provided by the embodiments of the present disclosure, the mobile integrated access and backhaul (IAB) node can transmit the information used for determining the TRP information of the IAB node to the location management function (LMF), where the TRP information is used to determine the location information of the terminal device that accesses the IAB node. The IAB node determines the location information of the terminal device that accesses the IAB node based on the TRP information, thereby improving the positioning efficiency of the terminal device that accesses the mobile IAB node.

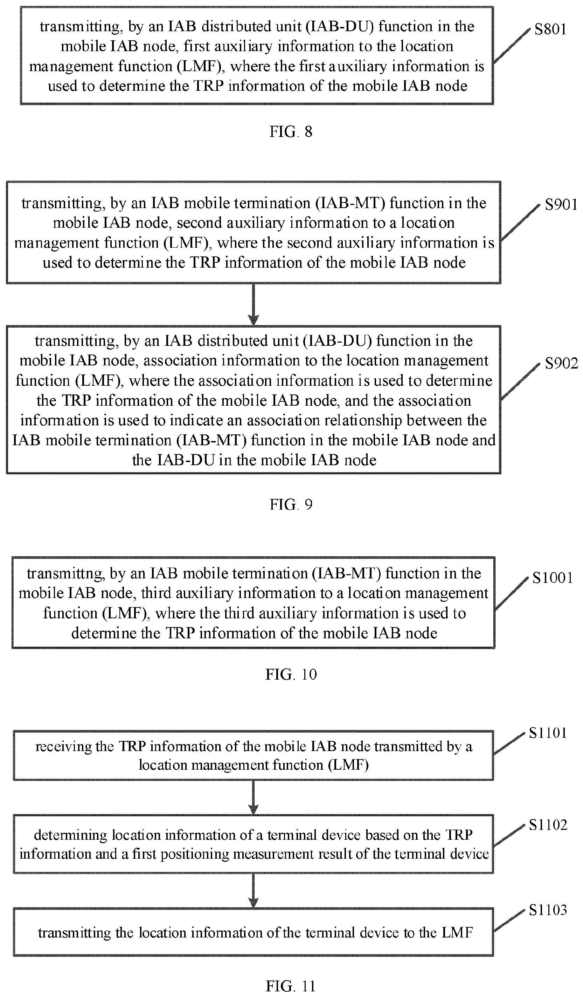

Referring to FIG. 8, FIG. 8 is a schematic flowchart of another method for determining transmission and reception point (TRP) information provided by an embodiment of the present disclosure. The method for determining the transmission and reception point (TRP) information is performed by a mobile integrated access and backhaul (IAB) node. As shown in FIG. 8, the method may include, but not limited to, the following steps.

In step S801, an IAB distributed unit (IAB-DU) function in the mobile integrated access and backhaul (IAB) node transmits first auxiliary information to the location management function (LMF), where the first auxiliary information is used to determine the TRP information of the IAB node.

In the embodiment of the present disclosure, the process of the IAB node performing step S801 may be, for example, that the IAB-DU in the IAB node transmits the first auxiliary information to an IAB-donor, where the first auxiliary information is transmitted by the IAB-donor to the LMF.

The IAB-DU in the IAB node may transmit an F1AP message to the IAB-donor, and the F1AP message includes the first auxiliary information. The F1AP message may be at least one of the following messages: a TRP information response message, a TRP information update message, and other F1AP messages except the TRP information response message and the TRP information update message.

The IAB-donor may transmit an NRPPa message to the LMF, and the NRPPa message includes the first auxiliary information. The NRPPa message may be at least one of the following messages: a TRP information response message, a TRP information update message, and other NRPPa messages except the TRP information response message and the TRP information update message.

In the embodiments of the present disclosure, the mobile IAB node may be in a moving state or a stationary state. In an example, the IAB-DU in the IAB node may periodically transmit the first auxiliary information to the LMF. In another example, the IAB-DU in the IAB node may transmit the first auxiliary information to the LMF based on the TRP information of the LMF. In another example, the IAB-DU in the IAB node may transmit the first auxiliary information to the LMF when a location of the IAB-DU changes.

In an embodiment of the present disclosure, the first auxiliary information includes at least one TRP information, and the TRP information includes at least one of: mobile IAB indication, identification of the mobile IAB node, identification of an IAB mobile termination (IAB-MT) function in the mobile IAB node, a previous physical cell identity (PCI) of the mobile IAB node, a previous cell global identity (CGI) of the mobile IAB node, an updated physical cell identity (PCI) of the mobile IAB node, an updated cell global identity (CGI) of the mobile IAB node, location information of the mobile IAB node, or a validity duration of the TRP information, where the mobile IAB indication is used to indicate that the mobile IAB node is a mobile node.

Optionally, the TRP information included in the first auxiliary information may be used to indicate TRP information of one or more TRP items in a TRP list. In an embodiment, the number of TRP information in the first auxiliary information may be multiple, and each TRP information may correspond to one TRP item, and is used to indicate TRP information of the one TRP item in the TRP list; TRP information is included in each TRP item in the TRP list, and is used to indicate TRP information corresponding to a specific TRP. In another embodiment, the TRP information included in the first auxiliary information is used as separate information, and the number of TRP information may be single, and is used to indicate TRP information of all TRP items in the TRP list; that is, all the TRP items in the TRP list may use the same TRP information.

The validity duration of the TRP information means that after the validity duration expires, the LMF needs to re-determine the TRP information, to re-request the TRP information, and/or to consider the current TRP information to be unavailable.

In the embodiment of the present disclosure, on the basis of step S801, the mobile IAB node may further perform the following processes: receiving second positioning request information from the LMF, where the second positioning request information is used to request the mobile IAB node to perform positioning measurement according to a reference signal of the terminal device to obtain a second positioning measurement result; and transmitting the second positioning measurement result to the LMF, to instruct the LMF to determine the location information of the terminal device according to the second positioning measurement result and the TRP information.

Specifically, the LMF may calculate or obtain the location information of the terminal device according to the TRP information and the second positioning measurement result.

In the embodiment of the present disclosure, the location information of the IAB node in the TRP information may include trajectory information of the IAB node. The trajectory information of the IAB node includes at least one of: current trajectory information of the IAB node, historical trajectory information of the IAB node, or predicted trajectory information of the IAB node. The current trajectory information is trajectory information of the IAB node in a current time period. The historical trajectory information is trajectory information of the IAB node in a historical time period, and may be used to predict the trajectory information of the IAB node in a future time period. The predicted trajectory information is the trajectory information of the IAB node in the future time period.

In an embodiment of the present disclosure, the TRP information of the IAB node may include location information of the IAB node. In addition, the TRP information of the IAB node may also include at least one of the following items: a mobile IAB indication, an identification of the IAB node, an identification of an IAB mobile termination (IAB-MT) function in the IAB node, a previous physical cell identity (PCI) of the IAB node, a previous cell global identity (CGI) of the IAB node, an updated physical cell identity (PCI) of the IAB node, an updated cell global identity (CGI) of the IAB node, or a validity duration of the TRP information. The mobile IAB indication is used to indicate that the IAB node is a mobile IAB node.

At least one item of the above TRP information can uniquely identify the IAB node. That is to say, the IAB node can be uniquely determined based on at least one item of the above TRP information, that is, to determine the IAB node which the terminal device accesses. The location information of the IAB node is further determined; and the location information of the terminal device is determined based on a combination of the location information of the IAB node, a positioning measurement result of the IAB node and/or a positioning measurement result of the terminal device assessing the IAB node.

In the method for determining transmission and reception point (TRP) information provided by the embodiments of the present disclosure, the IAB distributed unit (IAB-DU) function in the mobile integrated access and backhaul (IAB) node may transmit the first auxiliary information to the location management function (LMF), where the first auxiliary information is used to determine the TRP information of the IAB node, and then the IAB-DU may determine the location information of the terminal device accessing the IAB node based on the TRP information, thereby improving the positioning efficiency of the terminal device accessing the mobile IAB node.

Referring to FIG. 9, FIG. 9 is a schematic flowchart of another method for determining transmission and reception point (TRP) information provided by an embodiment of the present disclosure. The method for determining the transmission and reception point (TRP) information is performed by a mobile integrated access and backhaul (IAB) node. As shown in FIG. 9, the method may include, but not limited to, the following steps.

In step S901, an IAB mobile termination (IAB-MT) function in the mobile integrated access and backhaul (IAB) node transmits second auxiliary information to a location management function (LMF), where the second auxiliary information is used to determine the TRP information of the IAB node.

The IAB-MT in the mobile IAB node may transmit an LTE positioning protocol (LPP) message to the LMF, and the LPP message includes the second auxiliary information. The LPP message may be at least one of the following messages: a Provide Capabilities message, a Provide Location Information message, and other LPP messages except the Provide Capabilities message and the Provide Location Information message.

The mobile IAB node may be in a moving state or a static state. In an example, the IAB-MT in the IAB node may periodically transmit the second auxiliary information to the LMF. In another example, the IAB-MT in the IAB node may transmit the second auxiliary information to the LMF according to a request from the LMF. In another example, the IAB-MT in the IAB node may transmit the second auxiliary information to the LMF when a location of the IAB-MT changes.

In the embodiment of the present disclosure, the second auxiliary information may include at least one of: a mobile IAB indication, an identification of the IAB node, indication information of the IAB node, or information of a relative position between the IAB-DU and the IAB-MT, where the indication information of the mobile IAB node is used to indicate that the mobile IAB node includes both the IAB-MT and the IAB-DU, and the mobile IAB indication is used to indicate that the mobile IAB node is a mobile node.

The IAB node indication information is used to indicate that the IAB node includes both the IAB-MT and the IAB-DU, that is, to indicate that a node has both an IAB-MT function and an IAB-DU function.

In step S902, an IAB distributed unit (IAB-DU) function in the mobile integrated access and backhaul (IAB) node transmits association information to the location management function (LMF), where the association information is used to determine the TRP information of the IAB node, and the association information is used to indicate an association relationship between the IAB mobile termination (IAB-MT) function in the IAB node and the IAB-DU in the IAB node.

The mobile IAB node may be in a moving state or a static state. In an example, the IAB-DU in the IAB node may periodically transmit the association information to the LMF. In another example, the IAB-DU in the IAB node may transmit the association information to the LMF according to a request from the LMF. In another example, the IAB-DU in the IAB node may transmit the association information to the LMF when the location of the IAB-DU changes.

For example, the process of the IAB-DU in the IAB node transmitting the association information to the LMF may be that the IAB-DU in the IAB node transmits the association information to the IAB-donor, and the association information is transmitted by the IAB-donor to the LMF.

The IAB-donor may transmit an NRPPa message to LMF, and the NRPPa message includes the association information. The NRPPa message may be at least one of the following messages: a TRP information response message, a TRP information update message, and other NRPPa messages except the TRP information response message and the TRP information update message.

The IAB-DU in the IAB node may transmit an F1AP message to the IAB-donor, and the F1AP message includes the association information. The F1AP message may be at least one of the following messages: a TRP information response message, a TRP information update message, and other F1AP messages except the TRP information response message and the TRP information update message.

In the embodiment of the present disclosure, the association information is used to indicate an association relationship between the IAB-MT in the IAB node and the IAB-DU in the IAB node. That is to say, it indicates that the IAB-MT and the IAB-DU are located in the same IAB node, the IAB-MT and the IAB-DU may have the same location information in real time, or the IAB-MT and the IAB-DU may have fixed relative location information in real time.

In the embodiments of the present disclosure, step S901 and step S902 may not be executed at the same time, or one of two steps may not be executed. For example, in an example, the LMF may pre-configure the association information or obtain the association information in another way, and the IAB node may only perform step S901. In another example, the LMF may pre-configure the second auxiliary information or obtain the second auxiliary information in another way, and the IAB node may only perform step S902. In another example, if the LMF does not pre-configure the second auxiliary information and the association information, and does not obtain the second auxiliary information and the association information in other ways, then the IAB node may perform steps S901 and S902.

In an embodiment of the present disclosure, after the LMF obtains the second auxiliary information and the association information, the LMF may determine an identity of the IAB-MT based on the second auxiliary information; may determine the IAB-DU that has the association relationship with the IAB-MT according to the association relationship, and then may determine TRP information of the IAB node that includes the IAB-MT and the IAB-DU.

In the embodiments of the present disclosure, based on the above steps, the mobile IAB node may further perform the following processes: receiving second positioning request information from the LMF, where the second positioning request information is used to request the mobile IAB node to perform positioning measurement according to a reference signal of the terminal device to obtain a second positioning measurement result; and transmitting the second positioning measurement result to the LMF, to instruct the LMF to determine the location information of the terminal device based on the second positioning measurement result and the TRP information.

Specifically, the LMF may calculate or obtain the location information of the terminal device based on the TRP information and the second positioning measurement result.

In the embodiments of the present disclosure, the location information of the IAB node in the TRP information may include trajectory information of the IAB node. The trajectory information of the IAB node includes at least one of: current trajectory information of the IAB node, historical trajectory information of the IAB node, or predicted trajectory information of the IAB node. The current trajectory information is trajectory information of the IAB node in a current time period. The historical trajectory information is trajectory information of the IAB node in a historical time period. The predicted trajectory information is trajectory information of the IAB node in a future time period.

In the embodiment of the present disclosure, the TRP information of the IAB node may include the location information of the IAB node. In addition, the TRP information of the IAB node may also include at least one of the following items: a mobile IAB indication, an identification of the IAB node, an identification of an IAB mobile termination (IAB-MT) function in the IAB node, a previous physical cell identity (PCI) of the IAB node, a previous cell global identity (CGI) of the IAB node, an updated physical cell identity (PCI) of the IAB node, an updated cell global identity (CGI) of the IAB node, or a validity duration of the TRP information. The mobile IAB indication is used to indicate that the IAB node is a mobile IAB node.

At least one item of the above TRP information can uniquely identify the IAB node. That is to say, the IAB node can be uniquely determined based on at least one item of the above TRP information, that is, to determine the IAB node which the terminal device accesses. The location information of the IAB node is further determined; and the location information of the terminal device is determined based on a combination of the location information of the IAB node, a positioning measurement result of the IAB node and/or a positioning measurement result of the terminal device assessing the IAB node.

In the method for determining transmission and reception point (TRP) information provided by the embodiments of the present disclosure, the IAB mobile termination (IAB-MT) function in the mobile integrated access and backhaul (IAB) node transmits the second auxiliary information to the location management function (LMF), where the second auxiliary information is used to determine the TRP information of the IAB node; the IAB distributed unit (IAB-DU) function in the mobile integrated access and backhaul (IAB) node transmits the association information to the location management function (LMF), where the association information is used to determine the TRP information of the IAB node, and the association information is used to indicate an association relationship between the IAB mobile termination (IAB-MT) function in the IAB node and the IAB-DU in the IAB node. Then the TRP information is determined, and the location information of the terminal device assessing the IAB node is determined, so as to improve the positioning efficiency of the terminal device accessing the mobile IAB node.

Referring to FIG. 10, FIG. 10 is a schematic flowchart of another method for determining transmission and reception point (TRP) information provided by an embodiment of the present disclosure. The method for determining the transmission and reception point (TRP) information is performed by a mobile integrated access and backhaul (IAB) node. As shown in FIG. 10, the method may include, but not limited to, the following steps.

In step S1001, an IAB mobile termination (IAB-MT) function in the mobile integrated access and backhaul (IAB) node transmits third auxiliary information to a location management function (LMF), where the third auxiliary information is used to determine the TRP information of the IAB node.

In the embodiment of the present disclosure, the IAB-MT in the IAB node may transmit an LTE positioning protocol (LPP) message to the LMF, and the LPP message includes the third auxiliary information. The LPP message may be at least one of the following messages: a Provide Capabilities message, a Provide Location Information message, and other LPP messages except the Provide Capabilities message and the Provide Location Information message.

The mobile IAB node may be in a moving state or a static state. In an example, the IAB-MT in the IAB node may periodically transmit the third auxiliary information to the LMF. In another example, the IAB-MT in the IAB node may transmit the third auxiliary information to the LMF according to a request from the LMF. In another example, the IAB-MT in the IAB node may transmit the third auxiliary information to the LMF when a location of the IAB-MT changes.

In the embodiment of the present disclosure, the third auxiliary information includes at least one of: a mobile IAB indication, an identification of the IAB node, indication information of the mobile IAB node, or a TRP list supportable by the mobile IAB node, where the indication information of the mobile IAB node is used to indicate that the mobile IAB node includes both the IAB-MT and the IAB-DU, and the mobile IAB indication is used to indicate that the mobile IAB node is a mobile node.

The IAB node indication information is used to indicate that the IAB node includes both the IAB-MT and the IAB-DU, that is, to indicate that a node has both an IAB-MT function and an IAB-DU function.

The TRP list may include one or more TRP items, and each TRP item includes at least one of: PCI, CGI, frequency point information, information of a positioning reference signal, or trajectory information of the IAB node.

In the embodiment of the present disclosure, based on the above steps, the mobile IAB node may further perform the following processes: receiving second positioning request information from the LMF, where the second positioning request information is used to request the IAB node to perform positioning measurement according to a reference signal of the terminal device to obtain a second positioning measurement result; and transmitting the second positioning measurement result to the LMF, to instruct the LMF to determine the location information of the terminal device based on the second positioning measurement result and the TRP information.

Specifically, the LMF may calculate or obtain the location information of the terminal device based on the TRP information and the second positioning measurement result.

In the embodiments of the present disclosure, the location information of the IAB node in the TRP information may include trajectory information of the IAB node. The trajectory information of the IAB node includes at least one of: current trajectory information of the IAB node, historical trajectory information of the IAB node, or predicted trajectory information of the IAB node. The current trajectory information is trajectory information of the IAB node in a current time period. The historical trajectory information is trajectory information of the IAB node in a historical time period, and may be used to predict the trajectory information of the IAB node in a future time period. The predicted trajectory information is the trajectory information of the IAB node in the future time period.

In an embodiment of the present disclosure, the TRP information of the IAB node may include location information of the IAB node. In addition, the TRP information of the IAB node may also include at least one of the following items: a mobile IAB indication, an identification of the IAB node, an identification of an IAB mobile termination (IAB-MT) function in the IAB node, a previous physical cell identity (PCI) of the IAB node, a previous cell global identity (CGI) of the IAB node, an updated physical cell identity (PCI) of the IAB node, an updated cell global identity (CGI) of the IAB node, or a validity duration of the TRP information. The mobile IAB indication is used to indicate that the IAB node is a mobile IAB node.

At least one item of the above TRP information can uniquely identify the IAB node. That is to say, the IAB node can be uniquely determined based on at least one item of the above TRP information, that is, to determine the IAB node which the terminal device accesses. The location information of the IAB node is further determined; and the location information of the terminal device is determined based on a combination of the location information of the IAB node, a positioning measurement result of the IAB node and/or a positioning measurement result of the terminal device assessing the IAB node.

In the method for determining transmission and reception point (TRP) information provided by the embodiments of the present disclosure, the IAB mobile termination (IAB-MT) function in the mobile integrated access and backhaul (IAB) node can transmit the third auxiliary information to the location management function (LMF), where the third auxiliary information is used to determine the TRP information of the IAB node, then can determine the TRP information, and can determine the location information of the terminal device accessing the IAB node based on the determined TRP information, thereby improving the positioning efficiency of the terminal device accessing the mobile IAB node.

Referring to FIG. 11, FIG. 11 is a schematic flowchart of another method for determining transmission and reception point (TRP) information provided by an embodiment of the present disclosure. The method for determining the transmission and reception point (TRP) information is performed by a terminal device that accesses a mobile integrated access and backhaul (IAB) node. As shown in FIG. 11, the method may include, but not limited to, the following steps.

In step S1101, the TRP information of the IAB node transmitted by a location management function (LMF) is received.

In an embodiment of the present disclosure, the TRP information of the IAB node may include location information of the IAB node. In addition, the TRP information of the IAB node may also include at least one of the following items: a mobile IAB indication, an identification of the IAB node, an identification of an IAB mobile termination (IAB-MT) function in the IAB node, a previous physical cell identity (PCI) of the IAB node, a previous cell global identity (CGI) of the IAB node, an updated physical cell identity (PCI) of the IAB node, an updated cell global identity (CGI) of the IAB node, or a validity duration of the TRP information. The mobile IAB indication is used to indicate that the IAB node is a mobile IAB node.

At least one item of the above TRP information can uniquely identify the IAB node. That is to say, the IAB node can be uniquely determined based on at least one item of the above TRP information, that is, to determine the IAB node which the terminal device accesses. The location information of the IAB node is further determined; and the location information of the terminal device is determined based on a combination of the location information of the IAB node, a positioning measurement result of the IAB node and/or a positioning measurement result of the terminal device assessing the IAB node.

In the TRP information transmitted by the LMF to the terminal device, the location information of the IAB node may include trajectory information of the IAB node. The trajectory information of the IAB node includes at least one of: current trajectory information of the IAB node, historical trajectory information of the IAB node, or predicted trajectory information of the IAB node. The current trajectory information is trajectory information of the IAB node in a current time period. The historical trajectory information is trajectory information of the IAB node in a historical time period, and may be used to predict the trajectory information of the IAB node in a future time period. The predicted trajectory information is the trajectory information of the IAB node in the future time period.

In the embodiment of the present disclosure, the mobile IAB node may be in a moving state or a stationary state. In an example, the terminal device may periodically receive the TRP information of the IAB node transmitted by the LMF. In another example, the TRP information of the IAB node may be transmitted by the LMF under request when the terminal device has a positioning demand. In another example, the TRP information of the IAB node may be transmitted by the LMF when the location of the IAB node changes.

In step S1102, location information of a terminal device is determined based on the TRP information and a first positioning measurement result of the terminal device.

In step S1103, the location information of the terminal device is transmitted to the LMF.

In addition, it should be noted that if the terminal device receives positioning request information transmitted by the LMF, the terminal device may perform positioning measurement on a reference signal of the IAB node according to the positioning request information to obtain a positioning measurement result, and may transmit the positioning measurement result to the LMF.

In the method for determining transmission and reception point (TRP) information provided by the embodiments of the present disclosure, the terminal device accessing the mobile integrated access and backhaul (IAB) node can receive the TRP information of the IAB node transmitted by the location management function (LMF); can determine the location information of the terminal device according to the TRP information and the first positioning measurement result of the terminal device; can transmit the location information of the terminal device to the LMF; and then can determine the location information of the terminal device accessing the mobile IAB node, thereby improving the positioning efficiency of the terminal device accessing the mobile IAB node.

In the above embodiments provided by the present disclosure, the methods provided by the embodiments of the present disclosure are introduced from the perspective of a network device (for example, the location management function (LMF), the mobile integrated access and backhaul (IAB) node in the aforementioned method embodiments), and a terminal device (for example, the terminal device accessing the mobile integrated access and backhaul (IAB) node in the aforementioned method embodiments). In order to implement multiple functions in the method provided by the above embodiments of the present disclosure, the network device and the terminal device may include a hardware structure and a software module, so as to implement the above functions in a form of the hardware structure, the software module, or the hardware structure plus the software module. A certain function among the above functions may be performed by a hardware structure, a software module, or a hardware structure plus a software module.

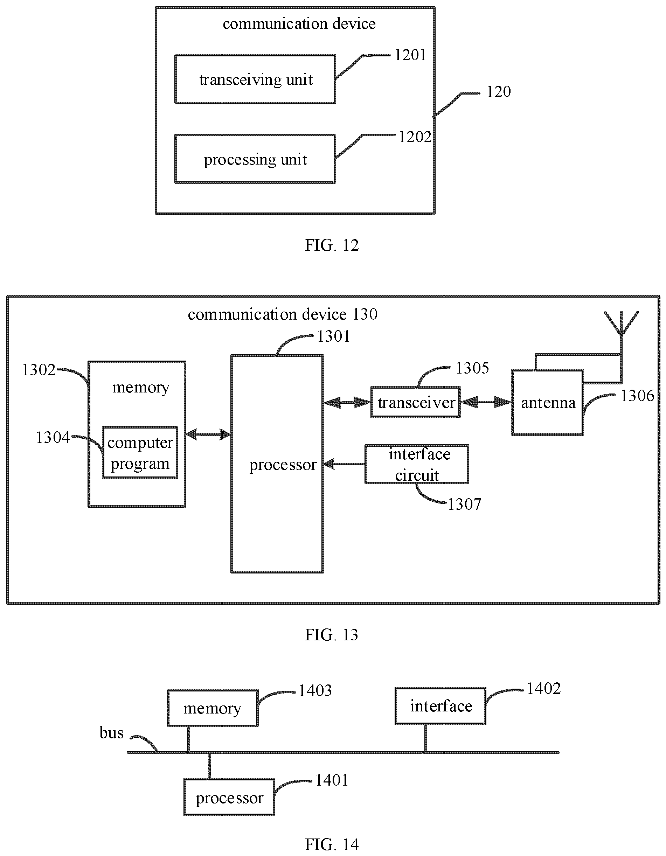

Referring to FIG. 12, FIG. 12 is a schematic structural diagram of a communication device 120 provided by an embodiment of the present disclosure. The communication device 120 shown in FIG. 12 may include a transceiving unit 1201 and a processing unit 1202. The transceiving unit 1201 may include a transmitting unit and/or a receiving unit. The transmitting unit is configured to implement the transmitting function, and the receiving unit is configured to implement the receiving function. The transceiving unit 1201 may implement the transmitting function and/or the receiving function.

The communication device 120 may be a terminal device (for example, the terminal device accessing the mobile integrated access and backhaul (IAB) node in the aforementioned method embodiments), or may be a device in the terminal device, or may be a device that can be used in cooperation with the terminal device. Alternatively, the communication device 120 may be a network device (for example, the location management function (LMF), the mobile integrated access and backhaul (IAB) node in the aforementioned method embodiments), a device in the network device, or a device that can be used in cooperation with the network device.

In a case that the communication device 120 is a network device (for example, the location management function (LMF) in the aforementioned method embodiments), the processing unit 1202 is configured to determine TRP information of the mobile integrated access and backhaul (IAB) node, where the TRP information is used to determine location information of a terminal device accessing the IAB node.

Optionally, the transceiving unit 1201 is configured to receive first auxiliary information of an IAB distributed unit (IAB-DU) function in the IAB node; and the processing unit 1202 is configured to determine the TRP information of the IAB node according to the first auxiliary information.

Optionally, the transceiving unit 1201 is specifically configured to receive the first auxiliary information transmitted by an IAB-donor, where the first auxiliary information is transmitted to the IAB-donor by the IAB-DU in the IAB node.

Optionally, the first auxiliary information includes at least one TRP information, and the at least one TRP information includes at least one of: a mobile IAB indication, an identification of the IAB node, an identification of an IAB mobile termination (IAB-MT) function in the IAB node, a previous physical cell identity (PCI) of the IAB node, a previous cell global identity (CGI) of the IAB node, an updated physical cell identity (PCI) of the IAB node, an updated cell global identity (CGI) of the IAB node, location information of the IAB node, or a validity duration of the at least one TRP information, where the mobile IAB indication is used to indicate that the IAB node is a mobile node.

Optionally, the location information of the IAB node includes: trajectory information of the IAB node.

Optionally, the processing unit 1202 may be configured to: determine the TRP information of the mobile IAB node according to second auxiliary information of an IAB mobile termination (IAB-MT) function in the mobile IAB node and association information of an IAB distributed unit (IAB-DU) function in the mobile IAB node, where the association information is used to indicate an association relationship between the IAB-MT in the mobile IAB node and the IAB-DU in the mobile IAB node.

Optionally, the transceiving unit 1201 is further configured to receive the second auxiliary information transmitted by the IAB-MT in the IAB node.

Optionally, the transceiving unit 1201 is further configured to receive the association information transmitted by the IAB-DU in the IAB node.

Optionally, the second auxiliary information includes at least one of: a mobile IAB indication, an identification of the mobile IAB node, indication information of the mobile IAB node, or information of a relative position between the IAB-DU and the IAB-MT, where the indication information of the mobile IAB node is used to indicate that the mobile IAB node includes both the IAB-MT and the IAB-DU, and the mobile IAB indication is used to indicate that the mobile IAB node is a mobile node.

Optionally, the transceiving unit 1201 is configured to receive third auxiliary information transmitted by an IAB mobile termination (IAB-MT) function in the IAB node; and the processing unit 1202 is configured to determine the TRP information of the mobile IAB node according to the third auxiliary information.

Optionally, the third auxiliary information includes at least one of: a mobile IAB indication, an identification of the mobile IAB node, indication information of the mobile IAB node, or a TRP list supportable by the mobile IAB node, where the indication information of the mobile IAB node is used to indicate that the mobile IAB node includes both the IAB-MT and the IAB-DU, and the mobile IAB indication is used to indicate that the mobile IAB node is a mobile node.

Optionally, the processing unit 1202 is further configured to determine the location information of the terminal device according to the TRP information, a first positioning measurement result of the terminal device, and/or a second positioning measurement result of the mobile IAB node.

Optionally, the transceiving unit 1201 is further configured to transmit third positioning request information and the TRP information to the terminal device, to request the terminal device to perform positioning measurement to obtain a third positioning measurement result, and determine the location information of the terminal device according to the third positioning measurement result and the TRP information; and receive the location information transmitted by the terminal device.

Optionally, the TRP information includes trajectory information of the IAB node, and the trajectory information includes at least one of: current trajectory information of the IAB node, historical trajectory information of the IAB node, predicted trajectory information of the IAB node.

In a case that the communication device 120 is a network device (for example, the mobile integrated access and backhaul (IAB) node in the aforementioned method embodiments), the transceiving unit 1201 is configured to transmit information used for determining TRP information of the mobile IAB node to a location management function (LMF), where the TRP information is used to determine location information of a terminal device accessing the mobile IAB node.

Optionally, the transceiving unit 1201 is specifically configured to transmit, by an IAB distributed unit (IAB-DU) function in the mobile IAB node, first auxiliary information to the LMF, where the first auxiliary information is used to determine the TRP information of the mobile IAB node.

Optionally, the transceiving unit 1201 is specifically configured to: transmit, by the IAB-DU in the mobile IAB node, the first auxiliary information to an IAB-donor, where the first auxiliary information is transmitted by the IAB-donor to the LMF.

Optionally, the first auxiliary information includes at least one TRP information, and the at least one TRP information includes at least one of: a mobile IAB indication, an identification of the mobile IAB node, an identification of an IAB mobile termination (IAB-MT) function in the mobile IAB node, a previous physical cell identity (PCI) of the mobile IAB node, a previous cell global identity (CGI) of the mobile IAB node, an updated physical cell identity (PCI) of the mobile IAB node, an updated cell global identity (CGI) of the mobile IAB node, location information of the mobile IAB node, or a validity duration of the at least one TRP information, where the mobile IAB indication is used to indicate that the mobile IAB node is a mobile node.

Optionally, the location information of the IAB node includes: trajectory information of the IAB node.

Optionally, the transceiving unit 1201 is specifically configured to transmit, by an IAB mobile termination (IAB-MT) function in the mobile IAB node, second auxiliary information to the LMF, where the second auxiliary information is used to determine the TRP information of the mobile IAB node.

Optionally, the second auxiliary information includes at least one of: a mobile IAB indication, an identification of the mobile IAB node, indication information of the mobile IAB node, or information of a relative position between the IAB-DU and the IAB-MT, where the indication information of the mobile IAB node is used to indicate that the mobile IAB node includes both the IAB-MT and the IAB-DU, and the mobile IAB indication is used to indicate that the mobile IAB node is a mobile node.

Optionally, the transceiving unit 1201 is specifically configured to transmit, by an IAB distributed unit (IAB-DU) function in the mobile IAB node, association information to the LMF, where the association information is used to determine the TRP information of the mobile IAB node, and the association information is used to indicate an association relationship between an IAB mobile termination (IAB-MT) function in the mobile IAB node and the IAB-DU in the mobile IAB node.

Optionally, the transceiving unit 1201 is specifically configured to transmit, by an IAB mobile termination (IAB-MT) function in the mobile IAB node, third auxiliary information to the LMF, where the third auxiliary information is used to determine the TRP information of the mobile IAB node.

Optionally, the third auxiliary information includes at least one of: a mobile IAB indication, an identification of the mobile IAB node, indication information of the mobile IAB node, or a TRP list supportable by the mobile IAB node, where the indication information of the mobile IAB node is used to indicate that the mobile IAB node includes both the IAB-MT and the IAB-DU, and the mobile IAB indication is used to indicate that the mobile IAB node is a mobile node.

Optionally, the transceiving unit 1201 is further configured to receive second positioning request information from the LMF, where the second positioning request information is used to request the mobile IAB node to perform positioning measurement according to a reference signal of the terminal device to obtain a second positioning measurement result; and transmit the second positioning measurement result to the LMF, to instruct the LMF to determine the location information of the terminal device according to the second positioning measurement result and the TRP information.

In a case that the communication device 120 is a terminal device (for example, the terminal device accessing the mobile integrated access and backhaul (IAB) node in the aforementioned method embodiments), the transceiving unit 1201 is configured to receive TRP information of the IAB node transmitted by a location management function (LMF); the processing unit 1202 is configured to determine location information of the terminal device according to the TRP information and a first positioning measurement result of the terminal device; and the transceiving unit 1201 is further configured to transmit the location information of the terminal device to the LMF.

Optionally, the TRP information includes trajectory information of the IAB node, and the trajectory information includes at least one of: current trajectory information of the IAB node, historical trajectory information of the IAB node, or predicted trajectory information of the IAB node.

Referring to FIG. 13, FIG. 13 is a schematic structural diagram of another communication device 130 provided by an embodiment of the present disclosure. The communication device 130 may be a network device (for example, the location management function (LMF), the mobile integrated access and backhaul (IAB) node in the aforementioned method embodiments), or may also be a terminal device (for example, the terminal device accessing the mobile integrated access and backhaul (IAB) node in the aforementioned method embodiments). A mobile terminal device that integrates access and backhaul IAB nodes); or it may be a chip, a chip system, or a processor or the like that supports the network device to implement the above method, or it may be a chip, a chip system, or a processor or the like that supports the terminal device to implement the above method. The device may be used to implement the method described in the above method embodiments, and for details, reference can be made to the description in the above method embodiments.

The communication device 130 may include one or more processors 1301. The processor 1301 may be a general-purpose processor or a special-purpose processor, or the like. For example, the processor may be a baseband processor or a central processing unit. The baseband processor may be used to process communication protocols and communication data. The central processor may be used to control the communication device (for example, a base station, a baseband chip, a terminal device, a chip of the terminal device, a DU or a CU, etc.), to execute the computer program, and to process data in the computer program.

Optionally, the communication device 130 may also include one or more memories 1302, on which a computer program 1304 may be stored. The processor 1301 is configured to execute the computer program 1304 to cause the communication device 1300 to perform steps described in the above method embodiments. Optionally, the memory 1302 may also store data. The communication device 1300 and the memory 1302 may be arranged separately or integrated together.

Optionally, the communication device 130 may also include a transceiver 1305 and an antenna 1306. The transceiver 1305 may be referred to as a transceiver unit, a transceiver module, a transceiver circuit, etc., and is configured to implement receiving and transmitting functions. The transceiver 1305 may include a receiver and a transmitter. The receiver may be referred to as a receiver unit or a receiver circuit, etc., and configured to implement receiving function; the transmitter may be referred to as a transmitter unit, a transmitter circuit, etc., and configured to implement the transmitting function.

Optionally, the communication device 130 may also include one or more interface circuits 1307. The interface circuit 1307 is configured to receive code instructions and transmit them to the processor 1301. The processor 1301 is configured to execute the code instructions to cause the communication device 1300 to perform the method described in the above method embodiments.

In a case that the communication device 130 is a network device (for example, the location management function (LMF) in the aforementioned method embodiments), the processor 1301 is configured to execute step S301 in FIG. 3; step S402 in FIG. 4; step S501 in FIG. 5; and step S602 in FIG. 6. The transceiver 1305 is configured to perform step S401 in FIG. 4; and step S601 in FIG. 6.

In a case that the communication device 130 is a network device (for example, the mobile integrated access and backhaul (IAB) node in the aforementioned method embodiments), the transceiver 1305 is configured to perform step S701 in FIG. 7; step S801 in FIG. 8; step S901 and step S902 in FIG. 9; and step S1001 in FIG. 10.

In a case that the communication device 130 is a terminal device (for example, the terminal device accessing the mobile integrated access and backhaul (IAB) node in the aforementioned method embodiments), the processor 1301 is configured to execute step S1102 in FIG. 11. The transceiver 1305 is configured to perform steps S1101 and S1103 in FIG. 11.

In an implementation, the processor 1301 may include a transceiver for implementing receiving and transmitting functions. For example, the transceiver may be a transceiver circuit, an interface, or an interface circuit. The transceiver circuit, the interface or the interface circuit for implementing receiving and transmitting functions may be separated from each other or integrated together. The above-mentioned transceiver circuit, interface or interface circuit may be configured to read and write codes/data, or transmit or transfer signals.

In an implementation, the processor 1301 may store a computer program 1303, and the computer program 1303, when running on the processor 1301, causes the communication device 1300 to perform the method described in the above method embodiments. The computer program 1303 may be solidified in the processor 1301, in which case the processor 1301 may be implemented by hardware.

In one implementation, the communication device 130 may include a circuit, and the circuit can implement the functions of transmitting, receiving, or communicating in the foregoing method embodiments. The processor and the transceiver described in the present disclosure may be implemented in an integrated circuit (IC), an analog IC, a radio frequency integrated circuit (RFIC), a mixed signal IC, an application specific integrated circuits (ASIC), a printed circuit board ( printed circuit board (PCB), electronic equipment, etc. The processor and the transceiver may be manufactured using various IC process techniques, such as complementary metal oxide semiconductor (CMOS), N-channel Metal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication device in the description of the above embodiments may be a network device (for example, the location management function (LMF), the mobile integrated access and backhaul (IAB) node in the aforementioned method embodiments), and a terminal device (for example, the terminal device accessing the mobile integrated access and backhaul (IAB) node in the aforementioned method embodiments, the scope of the communication device according to the present disclosure is not limited thereto, and the structure of the communication device may not be limited by FIG. 13. The communication device may be a stand-alone device or may be a part of a larger device. For example, the communication device may be: (1) an independent integrated circuit (IC), or chip, or chip system, or subsystem; (2) a collection of one or more ICs, where, optionally, the IC collection may also include a storage component for storing data and a computer program; (3) ASIC, such as modem; (4) a module that can be embedded into other devices; (5) a receiver, a terminal device, an intelligent terminal device, a cellular phone, a wireless equipment, a handheld device, a mobile unit, a vehicle-mounted equipment, a network device, a cloud equipment, an artificial intelligence equipment, etc.; (6) other component(s), etc.

For the case where the communication device may be a chip or a chip system, reference may be made to a structural diagram of a chip as shown in FIG. 14. The chip shown in FIG. 14 includes a processor 1401 and an interface 1402. The number of processors 1401 may be one or multiple, and the number of interfaces 1402 may be multiple.

For the case where the chip is configured to implement the functions of the network device (for example, the location management function (LMF) in the aforementioned method embodiments) in the embodiments of the present disclosure, the interface 1402 is configured to receive first auxiliary information of an IAB distributed unit (IAB-DU) function in the mobile IAB node.

Optionally, the interface 1402 is further configured to receive the first auxiliary information transmitted by an IAB-donor, where the first auxiliary information is transmitted to the IAB-donor by the IAB-DU in the mobile IAB node.

Optionally, the first auxiliary information includes at least one TRP information, and the at least one TRP information includes at least one of: a mobile IAB indication, an identification of the mobile IAB node, an identification of an IAB mobile termination (IAB-MT) function in the mobile IAB node, a previous physical cell identity (PCI) of the mobile IAB node, a previous cell global identity (CGI) of the mobile IAB node, an updated physical cell identity (PCI) of the mobile IAB node, an updated cell global identity (CGI) of the mobile IAB node, location information of the mobile IAB node, or a validity duration of the at least one TRP information, where the mobile IAB indication is used to indicate that the mobile IAB node is a mobile node.

Optionally, the location information of the IAB node includes: trajectory information of the IAB node.

Optionally, the interface 1402 is further configured to receive the second auxiliary information transmitted by the IAB-MT in the IAB node.

Optionally, the interface 1402 is further configured to receive the association information transmitted by the IAB-DU in the IAB node.

Optionally, the second auxiliary information includes at least one of: a mobile IAB indication, an identification of the mobile IAB node, indication information of the mobile IAB node, or information of a relative position between the IAB-DU and the IAB-MT, where the indication information of the mobile IAB node is used to indicate that the mobile IAB node includes both the IAB-MT and the IAB-DU, and the mobile IAB indication is used to indicate that the mobile IAB node is a mobile node.

Optionally, the interface 1402 is further configured to receive third auxiliary information transmitted by an IAB mobile termination (IAB-MT) function in the IAB node.

Optionally, the third auxiliary information includes at least one of: a mobile IAB indication, an identification of the mobile IAB node, indication information of the mobile IAB node, or a TRP list supportable by the mobile IAB node, where the indication information of the mobile IAB node is used to indicate that the mobile IAB node includes both the IAB-MT and the IAB-DU, and the mobile IAB indication is used to indicate that the mobile IAB node is a mobile node.

Optionally, the interface 1402 is further configured to transmit third positioning request information and the TRP information to the terminal device, to request the terminal device to perform positioning measurement to obtain a third positioning measurement result, and determine the location information of the terminal device according to the third positioning measurement result and the TRP information; and receive the location information transmitted by the terminal device.

Optionally, the TRP information includes trajectory information of the IAB node, and the trajectory information includes at least one of: current trajectory information of the mobile IAB node, historical trajectory information of the mobile IAB node, or predicted trajectory information of the mobile IAB node.

For the case where the chip is configured to implement the functions of the network device (for example, the mobile integrated access and backhaul (IAB) node in the aforementioned method embodiments) in the embodiment of the present disclosure, the interface 1402 is configured to transmit information used for determining the TRP information of the mobile IAB node to a location management function (LMF), where the TRP information is used to determine location information of a terminal device accessing the mobile IAB node.

Optionally, the interface 1402 is specifically configured to transmit first auxiliary information to the LMF by an IAB distributed unit (IAB-DU) function in the IAB node, where the first auxiliary information is used to determine the TRP information of the IAB node.

Optionally, the interface 1402 is specifically configured to transmit the first auxiliary information to the IAB-donor by the IAB-DU in the IAB node, and the first auxiliary information is transmitted by the IAB-donor to the LMF.

Optionally, the first auxiliary information includes at least one TRP information, and the at least one TRP information includes at least one of: a mobile IAB indication, an identification of the mobile IAB node, an identification of an IAB mobile termination (IAB-MT) function in the mobile IAB node, a previous physical cell identity (PCI) of the mobile IAB node, a previous cell global identity (CGI) of the mobile IAB node, an updated physical cell identity (PCI) of the mobile IAB node, an updated cell global identity (CGI) of the mobile IAB node, location information of the mobile IAB node, or a validity duration of the at least one TRP information, where the mobile IAB indication is used to indicate that the mobile IAB node is a mobile node.

Optionally, the location information of the IAB node includes: trajectory information of the IAB node.

Optionally, the interface 1402 is specifically configured to transmit second auxiliary information to the LMF by an IAB mobile termination (IAB-MT) function in the mobile IAB node, where the second auxiliary information is used to determine the TRP information of the mobile IAB node.

Optionally, the second auxiliary information includes at least one of: a mobile IAB indication, an identification of the mobile IAB node, indication information of the mobile IAB node, or information of a relative position between the IAB-DU and the IAB-MT, where the indication information of the mobile IAB node is used to indicate that the mobile IAB node includes both the IAB-MT and the IAB-DU, and the mobile IAB indication is used to indicate that the mobile IAB node is a mobile node.

Optionally, the interface 1402 is specifically configured to transmit transmitting association information to the LMF by an IAB distributed unit (IAB-DU) function in the mobile IAB node, where the association information is used to determine the TRP information of the mobile IAB node, and the association information is used to indicate an association relationship between an IAB mobile termination (IAB-MT) function in the mobile IAB node and the IAB-DU in the mobile IAB node.

Optionally, the interface 1402 is specifically configured to transmit third auxiliary information to the LMF by an IAB mobile termination (IAB-MT) function in the mobile IAB node, where the third auxiliary information is used to determine the TRP information of the mobile IAB node.

Optionally, the third auxiliary information includes at least one of: a mobile IAB indication, an identification of the mobile IAB node, indication information of the mobile IAB node, or a TRP list supportable by the mobile IAB node, where the indication information of the mobile IAB node is used to indicate that the mobile IAB node includes both the IAB-MT and the IAB-DU, and the mobile IAB indication is used to indicate that the mobile IAB node is a mobile node.

Optionally, the interface 1402 is further configured to receive second positioning request information from the LMF, where the second positioning request information is used to request the mobile IAB node to perform positioning measurement according to a reference signal of the terminal device to obtain a second positioning measurement result; and transmit the second positioning measurement result to the LMF, to instruct the LMF to determine the location information of the terminal device according to the second positioning measurement result and the TRP information.

For the case where the chip is configured to implement the functions of the terminal device (for example, the terminal device accessing the mobile integrated access and backhaul (IAB) node in the aforementioned method embodiments) in the embodiments of the present disclosure, the interface 1402 is configured to receive TRP information of the IAB node transmitted by a location management function (LMF), where the TRP information is used to determine the location information of the terminal device.

The interface 1402 is further configured to transmit the location information of the terminal device to the LMF.

Optionally, the TRP information includes trajectory information of the IAB node; the trajectory information includes at least one of: current trajectory information of the IAB node, historical trajectory information of the IAB node, predicted trajectory information.

Optionally, the chip further includes a memory 1403, and the memory 1403 is configured to store necessary computer programs and data.

Those skilled in the art can also understand that various illustrative logical blocks and steps listed in the embodiments of the present disclosure can be implemented by electronic hardware, computer software, or a combination of both. Whether such functions are implemented in hardware or software depends on the specific application and the overall system design requirement. Those skilled in the art can use various methods to implement the described functions for each specific application, but such implementation should not be understood as exceeding the protection scope of the embodiments of the present disclosure.

An embodiment of the present disclosure further provides a communication system. The system includes a communication device as a network device (for example, the location management function (LMF) in the aforementioned method embodiments) in the aforementioned embodiment of FIG. 12, a communication device as a network device (for example, the mobile integrated access and backhaul (IAB) node in the aforementioned method embodiments) in the aforementioned embodiment of FIG. 12, and a communication device as a terminal device (for example, the terminal device accessing the mobile integrated access and backhaul (IAB) node in the aforementioned method embodiments).

The present disclosure further provides a readable storage medium, on which instructions are stored. When the instructions are executed by a computer, functions of any of the above method embodiments are implemented.

The present disclosure further provides a computer program product. The computer program product is executed by a computer to implement functions of any of the above method embodiments.

The present disclosure further provides a communication system, including a location management function (LMF), a mobile integrated access and backhaul (IAB) node, and a terminal device that accesses the mobile integrated access and backhaul (IAB) node. The LMF is configured to perform the method as described in any one of the embodiments of FIG. 3 to FIG. 6, the IAB node is configured to perform the method as described in any one of the embodiments of FIG. 7 to FIG. 10, the terminal device is configured to perform the method as described in any one of the embodiments of FIG. 11.

The above embodiments may be implemented in whole or in part by software, hardware, firmware, or any combination thereof. When implemented by software, it may be implemented in whole or in part in the form of a computer program product. The computer program product includes one or more computer programs. When the computer program is loaded and executed by a computer, the processes or functions described in the embodiments of the present disclosure are generated in whole or in part. The computer may be a general-purpose computer, a special-purpose computer, a computer network, or other programmable device. The computer program may be stored in or transferred from one computer-readable storage medium to another computer-readable storage medium. For example, the computer program may be transferred from a website, a computer, a server, or a data center to another website, computer, server or data center to another website, a computer, a server, or a data center to another website, computer, server or data center through wired means (such as coaxial cable, optical fiber, digital subscriber line (DSL)) or wireless means (such as infrared, wireless, microwave, etc.). The computer-readable storage medium may be any available medium that can be accessed by a computer or a data storage device integrated by one or more available media, which includes a server, a data center, and so on. The available media may be magnetic media (e.g., floppy disk, hard disk, magnetic tape), optical media (e.g., high-density digital video discs (DVD)), or semiconductor media (e.g., solid state disk (SSD)) etc.

Those of ordinary skill in the art may appreciate that numerical numbers such as first and second involved in the present disclosure are only for convenience of description, and are not used to limit the scope of the embodiments of the present disclosure, or to indicate the order.

At least one in the present disclosure may also be described as one or more, and the plurality may be two, three, four or more, which are not limited by the present disclosure. In the embodiments of the present disclosure, technical features are distinguished by terms "first", "second", "third", "A", "B", "C", and "D", etc. The technical features described by the terms "first", "second", "third", "A", "B", "C" and "D" are not in an order of precedence or in an order of size.

The corresponding relationships shown in each table in the present disclosure can be configured or predefined. The values of the information in each table are only examples and can be configured as other values, which is not limited by the present disclosure. When the correspondence between information and each parameter is configured, it is not necessarily required to configure all the correspondences shown in each table. For example, in the table in the present disclosure, the correspondences shown in some rows may not be configured. For another example, appropriate form adjustments can be made based on the above table, such as splitting, merging, etc. The names of the parameters shown in the titles of the above tables may also be other names understandable by the communication apparatus, and the values or expressions of the parameters may also be other values or expressions understandable by the communication apparatus. When implementing the above tables, other data structures can also be used, such as array, queue, container, stack, linear list, pointer, linked list, tree, graph, structure, class, heap, distributed table or hash table.

The term predefined in the present disclosure may be understood as defined, predefined, storage, pre-storage, pre-negotiation, pre-configuration, solidification, or pre-burning.

Those of ordinary skill in the art will appreciate that the units and algorithm steps of each example described in conjunction with the embodiments disclosed herein can be implemented with electronic hardware, or a combination of computer software and electronic hardware. Whether these functions are performed in hardware or software depends on the specific application and design constraints of the technical solution. Those of ordinary skill in the art may implement the described functionality using different methods for each specific application, but such implementations should not be considered as exceeding the scope of the present disclosure.

Those of ordinary skill in the art can clearly understand that for the convenience and simplicity of description, reference may be made to the corresponding processes in the foregoing method embodiments for the specific working processes of the systems, devices and units described above, which will not be described again here.

The above embodiments are only specific implementations of the present disclosure, but the protection scope of the present disclosure is not limited thereto. Changes or substitutions easily occurring to any person familiar with the technical field within the technical scope disclosed in the present disclosure shall fall within the protection scope of the present disclosure. Therefore, the protection scope of the present disclosure should be subject to the protection scope of the claims.

## Claims

1. A method for determining transmission and reception point (TRP) information, performed by a location management function (LMF), comprising:
determining TRP information of a mobile integrated access and backhaul (IAB) node, wherein the TRP information is used to determine location information of a terminal device accessing the mobile IAB node.

2. The method according to claim 1, wherein determining the TRP information of the mobile IAB node comprises:
receiving first auxiliary information of an IAB distributed unit (IAB-DU) function in the mobile IAB node; and
determining the TRP information of the mobile IAB node according to the first auxiliary information.

3. The method according to claim 2, wherein receiving the first auxiliary information of the IAB-DU function in the mobile IAB node comprises:
receiving the first auxiliary information transmitted by an IAB-donor, wherein the first auxiliary information is transmitted to the IAB-donor by the IAB-DU in the mobile IAB node.

4. The method according to claim 2 or 3, wherein the first auxiliary information comprises at least one TRP information, and the at least one TRP information comprises at least one of:
a mobile IAB indication, an identification of the mobile IAB node, an identification of an IAB mobile termination (IAB-MT) function in the mobile IAB node, a previous physical cell identity (PCI) of the mobile IAB node, a previous cell global identity (CGI) of the mobile IAB node, an updated PCI of the mobile IAB node, an updated CGI of the mobile IAB node, location information of the mobile IAB node, or a validity duration of the at least one TRP information,
wherein the mobile IAB indication is used to indicate that the mobile IAB node is a mobile node.

5. The method according to claim 4, wherein the location information of the mobile IAB node comprises trajectory information of the mobile IAB node.

6. The method according to claim 1, wherein determining the TRP information of the mobile IAB node comprises:
determining the TRP information of the mobile IAB node according to second auxiliary information of an IAB-MT function in the mobile IAB node and association information of an IAB-DU function in the mobile IAB node,
wherein the association information is used to indicate an association relationship between the IAB-MT in the mobile IAB node and the IAB-DU in the mobile IAB node.

7. The method according to claim 6, further comprising:
receiving the second auxiliary information transmitted by the IAB-MT in the mobile IAB node.

8. The method according to claim 6, further comprising:
receiving the association information transmitted by the IAB-DU in the mobile IAB node.

9. The method according to any one of claims 6 to 8, wherein the second auxiliary information comprises at least one of:
a mobile IAB indication, an identification of the mobile IAB node, indication information of the mobile IAB node, or information of a relative position between the IAB-DU and the IAB-MT,
wherein the indication information of the mobile IAB node is used to indicate that the mobile IAB node comprises both the IAB-MT and the IAB-DU, and
the mobile IAB indication is used to indicate that the mobile IAB node is a mobile node.

10. The method according to claim 1, wherein determining the TRP information of the mobile IAB node comprises:
receiving third auxiliary information transmitted by an IAB-MT function in the mobile IAB node; and
determining the TRP information of the mobile IAB node according to the third auxiliary information.

11. The method according to claim 10, wherein the third auxiliary information comprises at least one of:
a mobile IAB indication, an identification of the mobile IAB node, indication information of the mobile IAB node, or a TRP list supportable by the mobile IAB node,
wherein the indication information of the mobile IAB node is used to indicate that the mobile IAB node comprises both the IAB-MT and the IAB-DU, and
the mobile IAB indication is used to indicate that the mobile IAB node is a mobile node.

12. The method according to claim 1, further comprising:
determining the location information of the terminal device according to the TRP information, a first positioning measurement result of the terminal device, and/or a second positioning measurement result of the mobile IAB node.

13. The method according to claim 1, further comprising:
transmitting third positioning request information and the TRP information to the terminal device, to request the terminal device to perform positioning measurement to obtain a third positioning measurement result, and determine the location information of the terminal device according to the third positioning measurement result and the TRP information; and
receiving the location information transmitted by the terminal device.

14. The method according to claim 13, wherein the TRP information comprises trajectory information of the mobile IAB node, and
the trajectory information comprises at least one of: current trajectory information of the mobile IAB node, historical trajectory information of the mobile IAB node, or predicted trajectory information of the mobile IAB node.

15. A method for determining transmission and reception point (TRP) information, performed by a mobile integrated access and backhaul (IAB) node, comprising:
transmitting information used for determining TRP information of the mobile IAB node to a location management function (LMF),
wherein the TRP information is used to determine location information of a terminal device accessing the mobile IAB node.

16. The method according to claim 15, wherein the transmitting the information used for determining the TRP information of the mobile IAB node to the LMF comprises:
transmitting, by an IAB distributed unit (IAB-DU) function in the mobile IAB node, first auxiliary information to the LMF, wherein the first auxiliary information is used to determine the TRP information of the mobile IAB node.

17. The method according to claim 16, wherein the transmitting, by the IAB-DU function in the mobile IAB node, the first auxiliary information to the LMF comprises:
transmitting, by the IAB-DU in the mobile IAB node, the first auxiliary information to an IAB-donor, wherein the first auxiliary information is transmitted by the IAB-donor to the LMF.

18. The method according to claim 16 or 17, wherein the first auxiliary information comprises at least one TRP information, and the at least one TRP information comprises at least one of:
a mobile IAB indication, an identification of the mobile IAB node, an identification of an IAB mobile termination (IAB-MT) function in the mobile IAB node, a previous physical cell identity (PCI) of the mobile IAB node, a previous cell global identity (CGI) of the mobile IAB node, an updated PCI of the mobile IAB node, an updated CGI of the mobile IAB node, location information of the mobile IAB node, or a validity duration of the at least one TRP information,
wherein the mobile IAB indication is used to indicate that the mobile IAB node is a mobile node.

19. The method according to claim 18, wherein the location information of the mobile IAB node comprises: trajectory information of the mobile IAB node.

20. The method according to claim 15, wherein the transmitting the information used for determining the TRP information of the mobile IAB node to the LMF comprises:
transmitting, by an IAB-MT function in the mobile IAB node, second auxiliary information to the LMF, wherein the second auxiliary information is used to determine the TRP information of the mobile IAB node.

21. The method according to claim 20, wherein the second auxiliary information comprises at least one of:
a mobile IAB indication, an identification of the mobile IAB node, indication information of the mobile IAB node, or information of a relative position between the IAB-DU and the IAB-MT,
wherein the indication information of the mobile IAB node is used to indicate that the mobile IAB node comprises both the IAB-MT and the IAB-DU, and
the mobile IAB indication is used to indicate that the mobile IAB node is a mobile node.

22. The method according to claim 15, wherein the transmitting the information used for determining the TRP information of the mobile IAB node to the LMF comprises:
transmitting, by an IAB-DU function in the mobile IAB node, association information to the LMF,
wherein the association information is used to determine the TRP information of the mobile IAB node, and the association information is used to indicate an association relationship between an IAB-MT function in the mobile IAB node and the IAB-DU in the mobile IAB node.

23. The method according to claim 15, wherein the transmitting the information used for determining the TRP information of the mobile IAB node to the LMF comprises:
transmitting, by an IAB-MT function in the mobile IAB node, third auxiliary information to the LMF, wherein the third auxiliary information is used to determine the TRP information of the mobile IAB node.

24. The method according to claim 23, wherein the third auxiliary information comprises at least one of:
a mobile IAB indication, an identification of the mobile IAB node, indication information of the mobile IAB node, or a TRP list supportable by the mobile IAB node,
wherein the indication information of the mobile IAB node is used to indicate that the mobile IAB node comprises both the IAB-MT and the IAB-DU, and
the mobile IAB indication is used to indicate that the mobile IAB node is a mobile node.

25. The method according to claim 15, further comprising:
receiving second positioning request information from the LMF, wherein the second positioning request information is used to request the mobile IAB node to perform positioning measurement according to a reference signal of the terminal device to obtain a second positioning measurement result; and
transmitting the second positioning measurement result to the LMF, to instruct the LMF to determine the location information of the terminal device according to the second positioning measurement result and the TRP information.

26. A method for determining transmission and reception point (TRP) information, performed by a terminal device accessing a mobile integrated access and backhaul (IAB) node, comprising:
receiving TRP information of the mobile IAB node transmitted by a location management function (LMF);
determining location information of the terminal device according to the TRP information and a first positioning measurement result of the terminal device; and
transmitting the location information of the terminal device to the LMF.

27. The method according to claim 26, wherein the TRP information comprises trajectory information of the mobile IAB node, and
the trajectory information comprises at least one of: current trajectory information of the mobile IAB node, historical trajectory information of the mobile IAB node, or predicted trajectory information of the mobile IAB node.

28. A communication device, configured in a location management function (LMF), comprising:
a processing unit, configured to determine transmission and reception point (TRP) information of a mobile integrated access and backhaul (IAB) node,
wherein the TRP information is used to determine location information of a terminal device accessing the mobile IAB node.

29. A communication device, configured in a mobile integrated access and backhaul (IAB) node, comprising:
a transceiving unit, configured to transmit information used for determining transmission and reception point (TRP) information of the mobile IAB node to a location management function (LMF),
wherein the TRP information is used to determine location information of a terminal device accessing the mobile IAB node.

30. A communication device, configured in a terminal device assessing a mobile integrated access and backhaul (IAB) node, comprising:
a transceiving unit, configured to receive transmission and reception point (TRP) information of the mobile IAB node transmitted by a location management function (LMF); and
a processing unit, configured to determine location information of the terminal device according to the TRP information and a first positioning measurement result of the terminal device,
wherein the transceiving unit is further configured to transmit the location information of the terminal device to the LMF.

31. A communication device, comprising: a processor and a memory, wherein a computer program is stored in the memory, and the processor is configured to execute the computer program stored in the memory to cause the device to perform the method according to any one of claims 1 to 14.

32. A communication device, comprising: a processor and a memory, wherein a computer program is stored in the memory, and the processor is configured to execute the computer program stored in the memory to cause the device to perform the method according to any one of claims 15 to 25.

33. A communication device, comprising: a processor and a memory, wherein a computer program is stored in the memory, and the processor is configured to execute the computer program stored in the memory to cause the device to perform the method according to any one of claims 26 to 27.

34. A communication device, comprising: a processor and an interface circuit,
wherein the interface circuit is configured to receive code instructions and transmit the code instructions to the processor, and
the processor is configured to run the code instructions to perform the method according to any one of claims 1 to 14.

35. A communication device, comprising: a processor and an interface circuit,
wherein the interface circuit is configured to receive code instructions and transmit the code instructions to the processor, and
the processor is configured to run the code instructions to perform the method according to any one of claims 15 to 25.

36. A communication device, comprising: a processor and an interface circuit,
wherein the interface circuit is configured to receive code instructions and transmit the code instructions to the processor, and
the processor is configured to run the code instructions to perform the method according to any one of claims 26 to 27.

37. A communication system, comprising a location management function (LMF), a mobile integrated access and backhaul (IAB) node, and a terminal device assessing the mobile IAB node, wherein
the LMF is configured to perform the method according to any one of claims 1 to 14, the mobile IAB node is configured to perform the method according to any one of claims 15 to 25, and the terminal device is configured to perform the method according to any one of claims 26 to 27.

38. A computer-readable storage medium, configured to store instructions, that when executed, cause the method according to any one of claims 1 to 14 to be implemented.

39. A computer-readable storage medium, configured to store instructions, that when executed, cause the method according to any one of claims 15 to 25 to be implemented.

40. A computer-readable storage medium, configured to store instructions, that when executed, cause the method according to any one of claims 26 to 27 to be implemented.
